# EUROPEAN PATENT SPECIFICATION

(11) **EP 3 351 602 B1**
(45) Date of publication and mention of the grant of the patent: **26.06.2024**
(21) Application number: 16846688.6
(22) Date of filing: 20.09.2016
(51) Int. Cl.: C09D 11/101, C09D 11/107, C09D 11/106, C09D 11/037, B41M 1/08

(54) **LITHOGRAPHIC PRINTING INK, VARNISH FOR LITHOGRAPHIC INKS, AND METHOD FOR PRODUCING PRINTED MATTER USING SAID INK**
LITHOGRAPHISCHE DRUCKTINTE, LACK FÜR LITHOGRAPHISCHE DRUCKTINTEN UND VERFAHREN ZUR HERSTELLUNG VON DRUCKSACHEN UNTER VERWENDUNG DIESER TINTE
ENCRE D'IMPRESSION LITHOGRAPHIQUE, VERNIS POUR ENCRES LITHOGRAPHIQUES, ET PROCÉDÉ DE PRODUCTION D'UN IMPRIMÉ AU MOYEN DE LADITE ENCRE

(30) Priority: 17.09.2015 JP 2015183673; 25.11.2015 JP 2015229338; 25.11.2015 JP 2015229339; 01.03.2016 JP 2016038606; 25.05.2016 JP 2016104087; 25.05.2016 JP 2016104089; 15.06.2016 JP 2016118987
(43) Date of publication of application: 25.07.2018
(73) Proprietor: Toray Industries, Inc., Tokyo 103-8666 (JP)
(72) Inventor: INOUE, Takejiro, Otsu-shi Shiga 520-8558 (JP); TSUJI, Yuichi, Otsu-shi Shiga 520-8558 (JP); MURASE, Seiichiro, Otsu-shi Shiga 520-8558 (JP); SADAKUNI, Hironobu, Otsu-shi Shiga 520-8558 (JP)
(74) Representative: Kador & Partner Part mbB
(86) International application number: PCT/JP2016/077750
(87) International publication number: WO 2017/047817

(56) References cited:
- EP-A1- 2 277 930
- WO-A1-2014/091923
- WO-A1-2017/090663
- WO-A1-2017/204104
- JP-A- H1 160 659
- JP-A- H05 156 196
- JP-A- S58 219 219
- JP-A- 2000 143 746
- JP-A- 2007 056 187
- JP-A- 2010 254 746
- JP-A- 2015 525 279
- US-A1- 2004 115 561
- US-A1- 2011 015 339

## Description

### [Technical Field]

The present invention relates a lithographic printing ink which has a highly sensitive curability for active energy beam simultaneously with a high washability with water, and which also has excellent resistance to surface staining in the printing and high water resistance of the cured film. The present invention also relates to a varnish for such lithographic ink and a method for producing printed material.

### [Background Technology]

Efforts toward reduction of VOC (volatile petroleum compounds) is ongoing in various fields of printing to thereby substantially reduce use of the volatile petroleum solvent in view of recent handling of environmental issues and maintaining working conditions.

Lithography (offset) is a printing system widely used as a system capable of inexpensively supplying a large volume of printed material at high speed, and it includes water lithography and waterless lithography.

In the case of water lithography, a large volume of wetting water is used in the course of image formation, and the large amount of volatile solvent in the wetting water causes operational and environmental problems.

On the other hand, such wetting water is no longer required in the case of waterless lithography using a silicone rubber or a fluororesin for the non-printing part.

Use of an aqueous ink or a solventless ink is considered desirable due to the use of a large amount of petroleum solvent in the inks used in common printings such as flexography, gravure, inkjet, and lithography. Use of a printing ink which can be instantaneously cured by irradiation with an active energy beam such as UV is expanding in many fields in view of installation, safety, environment, and high productivity. Since a large amount petroleum solvent is used for the washing solution of the ink used in the step of printing, development of inks allowing use of a washing solution mainly comprising water not containing any volatile solvent is also on the way.

Patent Document 1 discloses a water-washable offset composition which is curable with an active energy beam that can be used in waterless lithography. Patent Document 2 discloses an alkali-soluble gravure ink composition for UV-curable resist.

### [Prior Art Document]

### [Patent Document]

[Patent Document 1] Japanese Patent Application Laid-Open No. 2008-143993 (Claims)
[Patent Document 2] Japanese Patent No. 4830224 (Claims)
[Patent Document 3] US 2004/115561 A1
[Patent Document 4] US 2011/015339 A1
[Patent Document 5] EP 2 277 930 A1
[Patent Document 6] WO 2014/091923 A1
[Patent Document 7] JP H11 60659 A
[Patent Document 8] JP H05 156196 A

### [Summary of the Invention]

### [Problems to Be Solved by the Invention]

However, in the conventional active energy beam-curable offset printing inks disclosed in Patent Documents 1 and 2, sufficient curing was not accomplished at the printing speed actually used in the UV printer or by the amount of exposure in the case of power-saving UV, and the cured film suffered from insufficient water resistance. In addition, addition of a thixotropic agent was occasionally necessary to provide the ink with suitable printing adaptability (Patent Document 2). Furthermore, since the ink cures immediately after coating the ink on the substrate by an active energy beam, surface irregularities due to the insufficient ink levelling inviting decrease of the gloss value of the printed material compared to normal printed material occurred even if the curing was sufficient. In other words, ink viscosity had been increased by increasing the resin concentration in the lithographic ink to thereby improve the resistance to surface staining during the printing. However, increase of the viscosity of the lithographic ink results in the loss of the fluidity, and accordingly, the ink cures before the levelling of the ink in the active energy beam-curable printing wherein the ink instantaneously cures by the irradiation of an active energy beam. This resulted in the likeliness of surface irregularities on the film surface of the lithographic ink, and the printed material suffered from inferior gloss compared to the oil-based lithographic ink. Patent Document 3 discloses energy curable varnish and energy curable, water washable printing ink compositions suitable for waterless lithographic printing each containing: water soluble ethylenically unsaturated reactive oligomers and monomers; water insoluble ethylenically unsaturated reactive oligomers and monomers; and a resin selected from water soluble non-reactive resins, a water insoluble acid or base functional resins and water insoluble ethylenically unsaturated reactive resins, wherein said water insoluble resins contain acid functional groups. Patent Document 4 discloses an offset printing ink in which a modified pigment (D) is dispersed in a vehicle as a colorant, the modified pigment (D) is obtained by mixing a pigment (A), at least one of a resin or fat (B) having a polymerizable unsaturated group; and adding, mixing, and polymerizing with at least one polymerizable unsaturated monomer (C). Patent document 5 discloses a composition comprising at least one radiation curable (meth)acrylic copolymer A prepared by reacting a copolymer P obtained from copolymerizing monomers comprising (i) from 10 to 50 mole% of at least one (meth)acrylate (a1) comprising a first functional group, and (ii) from 50 to 90 mole% of at least one alkyl(meth)acrylate (a2) having at least 6 carbon atoms in the alkyl chain, with at least one (meth)acrylate (a3) comprising a second functional group which can react with the first functional group of (meth)acrylate (a1). Patent Document 6 discloses a pigment dispersant that exhibits an effect in a small amount of addition and imparts a high degree of fine dispersibility, stability, and fluidity. Patent document 7 discloses a method for the preparation of an aqueous dispersion of a reactive resin which is excellent in storage stability, colorlessness, operability and hardenability. Patent document 8 discloses a printing ink being excellent in water resistance and electrical insulation properties by mixing an epoxyphenyl acrylate or an epoxyalkyl acrylate as a vehicle with a photopolymerization initiator.

In view of such situation, an object of the present invention is to obviate the problems of the prior art as described above and provide a lithographic ink which has a highly sensitive curability for active energy beam simultaneously with a high washability with water, and which also has excellent resistance to surface staining in the printing, high water resistance when cured into a cured film, and high gloss. Another object of the present invention is to provide a varnish constituting such lithographic ink and a method for producing printed materials by using such ink.

### [Means for Solving the Problems]

Accordingly, the lithographic ink of tip comprises (a) a pigment and (b) a resin having an ethylenically unsaturated group and a hydrophilic group, further comprising (g) a pigment dispersant, wherein content of the pigment dispersant (g) is 5 to 50 mass % in relation to 100 mass % of the pigment (a), and wherein the pigment dispersant (g) contains an acidic group.

### [Merits of the Invention]

The present invention provides a lithographic ink which has a highly sensitive curability for active energy beam simultaneously with a high washability with water, and which also has excellent resistance to surface staining in the printing and high water resistance of the cured film. A printed material having excellent gloss can be realized by using such ink.

### [Embodiments for Carrying Out the Invention]

Next, the present invention is described in detail.

The lithographic ink of the present invention comprises (a) a pigment and a varnish component. The varnish component contains (b) a resin having an ethylenically unsaturated group and a hydrophilic group, (g) a pigment dispersant, wherein content of the pigment dispersant (g) is 5 to 50 mass % in relation to 100 mass % of the pigment (a), and wherein the pigment dispersant (g) contains an acidic group. The varnish component may optionally contain (c) a reactive diluent, (d) a component for suppressing ink deposition, (e) a photopolymerization initiator, (f) an emulsifier, and the like. In this specification, the varnish component may also be referred to as the "varnish for lithographic ink".

The lithographic ink of the present invention has highly sensitive curability for an active energy beam. Examples of the active energy beam include ultraviolet beam (UV), electron beam (EB), visible light beam, X ray, and particle beam, and the preferred is the UV beam in view of handling convenience of the source. The lithographic ink has a property that it cures by irradiation with the active energy beam, and the sensitivity is excellent.

The lithographic ink of the present invention contains (a) a pigment. The pigment in the present invention may be at least one member selected from inorganic and organic pigments commonly used in the printing inks, and in particular, an inorganic pigment and/or organic pigment used in the lithographic ink.

Examples of the inorganic pigment used in the present invention include titanium dioxide, calcium carbonate, barium sulfate, iron red, cadmium red, chrome yellow, zinc yellow, Prussian blue, ultramarine, organic bentonite, alumina white, iron oxide, carbon black, graphite, and aluminum.

Examples of the organic pigment include phthalocyanine pigments, soluble azo pigments, insoluble azo pigments, lake pigments, quinacridone pigments, isoindoline pigments, threne pigment, metal complex pigments, and more specifically, phthalocyanine blue, phthalocyanine green, azo red, monoazo red, monoazo yellow, diazo red, diazo yellow, quinacridone red, quinacridone magenta, and isoindoline yellow.

The pigment (a) of the present invention is preferably a carbon black, and the preferred is carbon black having an acidic group in view of the high effect of improving the ink fluidity.

The carbon black used in the present invention preferably has an average particle diameter of at least 10 nm and more preferably at least 15 nm in view of suppressing the increase of the viscosity of the ink composition. The average particle diameter is preferably up to 50 nm and more preferably up to 40 nm in order to realize gloss of the printed material.

The average particle diameter as used herein is the average of the particle diameter determined by the procedure comprising: observing the particles with a scanning electron microscope (SEM) to obtain a two-dimensional image, depicting a straight line so that it intersects at two points with the outer edge of the particle and the distance between the two intersecting points is maximum to use this distance as the diameter of the particle, further conducting similar measurement for arbitrarily selected 20 different particles, and calculating the average of the particle diameter measurements for use as the average particle diameter.

The carbon black of the present invention may preferably have a dibutyl phthalate absorption number in the range of 40 to 80 cm³ per 100 g of the carbon black, namely, 40 to 80 cm³/100 g. The method used for measuring the dibutyl phthalate absorption number of the carbon black is described in JIS K 6217-4: 2008 "Carbon black for rubber industry, Fundamental characteristics, Part 4: Determination of oil absorption number (OAN) and oil absorption number of compressed sample (COAN)", and size of the secondary agglutinate (structure) of the carbon black can be estimated from the absorption number. A higher dibutyl phthalate absorption number indicates larger size of the structure. The dibutyl phthalate absorption number of the carbon black is preferably at least 40 cm³/100 g in view of suppressing increase in the viscosity of the ink composition that occurs when the structure is too minute. In the meanwhile, the dibutyl phthalate absorption number of the carbon black is preferably up to 80 cm³/100 g in view of suppressing the phenomenon that the gloss of the printed material is lost by the increase in the surface roughness of the printed material even if levelling of the ink were sufficient.

The carbon black having an acidic group which is preferable for use in the present invention is typically the one having an oxidized surface, and having an oxygen-containing group such as carboxyl group, quinone group, lactone group, or hydroxyl group on the surface. Of these, the one preferable for use is the carbon black having carboxyl group because of the low cost.

The pigment (a) preferable for use in the present invention may also be a pigment which is a water-insoluble salt in view of clear tone and coloring as well as good solvent resistance. Of such pigments, the more preferred is an azo lake pigment due to clearer tone and coloring as well as good solvent resistance despite the low cost.

Examples of the azo lake pigment include those prepared by coupling a diazonium salt of an aromatic amine having a water-soluble group with a coupler component to prepare an azo dye, and reacting the azo dye with an alkaline earth metal salt to prepare the azo lake pigment, and known examples include acetoacetic acid anilide, pyrazolone, β-naphthol, β-oxynaphthoic acid, and β-oxinaphthoic acid anilide pigments. Typical examples include tartrazine aluminum lake, lake red C, brilliant carmine 6B, brilliant scarlet G, lake red D, Bordeaux 10B, orange II, carmine 3B, permanent red, and lithol red.

Metal complex pigments are also preferable for the pigment (a) of the present invention due to their clear color and high durability. Of such metal complex pigments, the more preferred is copper phthalocyanine which is a copper complex of phthalocyanine due to its excellent tone, clear color, high light resistance, and fastness.

Exemplary metal complex pigments include copper phthalocyanines such as copper phthalocyanine, highly chlorinated copper phthalocyanine, and also, brominated chlorinated copper phthalocyanine; and also, cobalt complex of phthalocyanine such as phthalocyanine cobalt and a complex of a Schiff base and nickel such as pigment yellow 150 and pigment yellow 153.

These pigments may be used alone or in combination of two or more.

Concentration of the pigment in the lithographic ink of the present invention is preferably at least 5 mass %, more preferably at least 10 mass %, and still more preferably at least 15 mass % in order to realize the intended concentration on the printed paper. In the meanwhile, the concentration is preferably up to 40 mass %, more preferably up to 30 mass %, and still more preferably up to 25 mass % in order to improve the ink fluidity to thereby realize good transfer between the rollers.

The lithographic ink of the present invention contains the resin (b) having an ethylenically unsaturated group and a hydrophilic group. The lithographic ink containing a varnish component comprising the resin (b) having an ethylenically unsaturated group and a hydrophilic group has a highly sensitive curability for active energy beam simultaneously with a high washability with water, and the ink also has excellent resistance to surface staining in the printing and high water resistance when cured into a cured film.

The "surface staining" as used herein means ink deposition on the non-printing part of the lithography plate where the ink is not supposed to be deposited. When the ink is deposited on the non-printing part of the lithography plate, the ink will be transferred onto the printed material.

In the case of the resin (b) having an ethylenically unsaturated group and a hydrophilic group, the resin (b) itself containing the ethylenically unsaturated group and the hydrophilic group is curable by the irradiation of an active energy beam, in particular, since it has an ethylenically unsaturated group in the side chain. In addition, the resin (b) having an ethylenically unsaturated group and a hydrophilic group preferably has a high molecular weight in view of reducing amount of the active energy beam necessary for the curing and improving the sensitivity of the curing by the active energy beam irradiation since, when the resin (b) itself containing an ethylenically unsaturated group and a hydrophilic group is cured by the irradiation of an active energy beam, the curing of the ink proceeds by radical reaction between the high molecular weight resins.

When sufficient ink curing by reduced UV irradiation can be accomplished, for example, in the UV printing by instantaneous curing of the ink by active energy beam irradiation, significant improvement in the productivity by increasing the printing speed and cost reduction by the use of a power-saving UV light source (for example, metal halide lamp or LED) will be possible.

On the other hand, in the case of common active energy beam-curable ink, the ink is cured by radical reaction of the low molecular weight compound having an ethylenically unsaturated group, and a large amount of active energy beam will be necessary for the curing.

Also, the resin (b) having an ethylenically unsaturated group and a hydrophilic group is soluble in an aqueous washing solution containing water as its main component particularly because of the presence of the hydrophilic group in its side chain, and this enables use of a non-petroleum detergent. In addition, the ink will be provided with a good pigment dispersibility since the hydrophilic group is capable of undergoing an interaction with the functional group on the pigment surface in the ink.

The resin (b) having an ethylenically unsaturated group and a hydrophilic group contributes for the improvement of the viscosity property of the ink by the hydrogen bond formed between the hydrophilic groups, and the ink viscosity is thereby increased. When the ink has a high viscosity, the ink agglutination under the high shear during the printing will be high, and ink repellency to the non-printing part will be improved, and more specifically, adhesion of the ink to the silicone rubber sill be reduced. This contributes for the improvement of the resistance to surface staining in the lithography.

In the prior art, there has been attempts for realizing an active energy beam-curable offset printing ink which can be washed with water by using a water-soluble resin (for example, Patent Document 1). However, in the case of using a water-soluble resin, sufficient film curing was not accomplished by the exposure using power-save UV in the actual UV printer and the cured film suffered from the risk of insufficient water resistance.

In the meanwhile, the lithographic ink of the present invention containing the resin (b) having an ethylenically unsaturated group and a hydrophilic group has both the ethylenically unsaturated group and the hydrophilic group, and therefore, the sensitivity in the film curing by the active energy beam irradiation can be increased to realize, for example, a cured film having a sufficient water resistance even in the case of the exposure using a power-saving UV by controlling the content of the ethylenically unsaturated group and the hydrophilic group.

Examples of the hydrophilic group of the resin (b) having an ethylenically unsaturated group and a hydrophilic group include at least one functional group selected from carboxyl group, sulfo group, phosphate group, hydroxy group (hydroxyl group), and amino group in view of the solubility in water. The hydrophilic group is preferably an acidic group, and more preferably carboxyl group in view of the good dispersibility of the pigment. In order to simultaneously realize the solubility in water and the good pigment dispersibility, the hydrophilic group preferably contains carboxyl group and hydroxy group.

In the present invention, acid value of the hydrophilic group in the resin (b) having an ethylenically unsaturated group and a hydrophilic group is preferably at least 30 mgKOH/g and up to 250 mgKOH/g. In order to realize good solubility of the resin in the aqueous washing solution, pigment dispersibility, and resistance to surface staining, the acid value of the hydrophilic group is preferably at least 30 mgKOH/g, more preferably at least 60 mgKOH/g, and still more preferably at least 75 mgKOH/g. In the meanwhile, the acid value of the hydrophilic group is preferably up to 250 mgKOH/g, more preferably up to 200 mgKOH/g, and still more preferably up to 150 mgKOH/g in order to provide water resistance with the cured film.

The acid value of the hydrophilic group may be determined according to the test method of "3.1 neutralization titration" in JIS K 0070: 1992 "Test methods for acid value, saponification value, ester value, iodine value, hydroxyl value and unsaponifiable matter of chemical products".

Solubility in water of the resin (b) having an ethylenically unsaturated group and a hydrophilic group of the present invention is preferably at least 0.1 g/(100 g - H₂O). When the solubility is in such range, washing with the aqueous washing solution will be facilitated. The solubility in water of the resin (b) having an ethylenically unsaturated group and a hydrophilic group is more preferably at least 0.3 g/(100 g - H₂O), and more preferably at least 0.5 g/(100 g - H₂O). In the meanwhile, an excessively high solubility in water may result in the loss of water resistance of the cured film while a higher solubility in water may result in the higher washability with water, and accordingly, the solubility in water of the resin (b) having an ethylenically unsaturated group and a hydrophilic group is preferably up to 100 g/(100 g - H₂O), more preferably up to 50 g/(100 g - H₂O), and still more preferably up to 10 g/(100 g - H₂O). The solubility is the one in water at 25°C.

In the present invention, iodine number of the ethylenically unsaturated group in the resin (b) having an ethylenically unsaturated group and a hydrophilic group is preferably at least 0.5 mol/kg and up to 3.0 mol/kg. In view of realizing good sensitivity to the active energy beam, the iodine number is preferably at least 0.5 mol/kg, and more preferably at least 1.0 mol/kg. In the meanwhile, the iodine number is preferably up to 3.0 mol/kg, more preferably up to 2.5 mol/kg, and still more preferably up to 2.0 mol/kg in order to realize good storage stability of the ink.

The iodine number of the ethylenically unsaturated group may be determined according to the method described in "6.0 Iodine value" in JIS K 0070: 1992 "Test methods for acid value, saponification value, ester value, iodine value, hydroxyl value and unsaponifiable matter of chemical products".

Examples of the base resin for the resin (b) having an ethylenically unsaturated group and a hydrophilic group include acrylic resin, styrene acrylic resin, styrene maleic acid resin, rosin-modified maleic acid resin, rosin-modified acrylic resin, epoxy resin, polyester resin, polyurethane resin, and phenol resin, while the base resin is not particularly limited.

Of the resins as described above, the preferred for the base of the resin (b) having an ethylenically unsaturated group and a hydrophilic group are acrylic resin, styrene acrylic resin, and styrene maleic resin in view of availability of the monomer, low cost, easy synthesis, compatibility with other components of the ink, dispersibility of the pigment, and the like.

Accordingly, in the present invention, the resin (b) having an ethylenically unsaturated group and a hydrophilic group is preferably at least one resin selected from acrylic resin, styrene acrylic resin, and styrene maleic acid resin.

In the present invention, the resin (b) having an ethylenically unsaturated group and a hydrophilic group containing a resin selected from acrylic resin, styrene acrylic acid resin, and styrene maleic acid resin may be prepared by polymerizing or copolymerizing a compound selected from a carboxyl group-containing monomer such as acrylic acid, methacrylic acid, itaconic acid, crotonic acid, maleic acid, fumaric acid, vinyl acetate, or an acid anhydride thereof, a hydroxy group-containing monomer such as 2-hydroxyethyl acrylate, an amino group-containing monomer such as dimethylamino ethyl methacrylate, mercapto group-containing monomer such as acrylic acid 2-(mercaptoacetoxy)ethyl, sulfo group-containing monomer such as acryl amide t-butyl sulfonic acid, phosphate group-containing monomer such as 2-methacryloyloxy ethyl acid phosphate, methacrylate, acrylate, styrene, acrylonitrile, vinyl acetate, and the like using a radical polymerization initiator; and then conducting addition reaction of the ethylenically unsaturated compound containing glycidyl group or isocyanate group, acrylic acid chloride chloride, methacrylic acid chloride, or allyl chloride to the active hydrogen-containing group in the polymer (the mercapto group, the amino group, the hydroxy group, or the carboxyl group). The method used, however, is not limited to the method as described above.

Examples of the ethylenically unsaturated compound having a glycidyl group include glycidyl acrylate, glycidyl methacrylate, allyl glycidyl ether, glycidyl crotonate, and glycidyl isocrotonate.

Examples of the ethylenically unsaturated compound having an isocyanate group include acryloyl isocyanate, methacryloyl isocyanate, acryloyl ethyl isocyanate, and methacryloyl ethyl isocyanate.

Examples of the base resin constituting the resin (b) having an ethylenically unsaturated group and a hydrophilic group include (meth)acrylic acid copolymer, (meth)acrylic acid-(meth)acrylate copolymer, styrene-(meth)acrylic acid copolymer, styrene-(meth)acrylic acid-(meth)acrylate copolymer, styrene-maleic acid copolymer, styrene-maleic acid-(meth)acrylic acid copolymer, and styrene-maleic acid-(meth)acrylate copolymer.

In view of providing the cured film with water resistance, the weight average molecular weight of the resin (b) having an ethylenically unsaturated group and a hydrophilic group is preferably at least 5,000, more preferably at least 15,000, still more preferably at least 20,000, and most preferably at least 25,000. In the meanwhile, the weight average molecular weight is preferably up to 100,000, more preferably up to 75,000, and still more preferably up to 50,000 in order to realize the solubility in water of the resin.

The weight average molecular weight can be determined by a measurement using gel permeation chromatography (GPC) and conducting the calculation in terms of polystyrene.

Content of the resin (b) having an ethylenically unsaturated group and a hydrophilic group in the lithographic printing ink of the present invention is preferably at least 5 mass % and more preferably at least 10 mass % in view of securing the ink viscosity necessary for the printing and the sensitivity necessary for the curing. The content is preferably up to 60 mass %, more preferably up to 50 mass %, and still more preferably up to 40 mass % in view of securing the ink fluidity and transfer of the ink between the rollers necessary for the printing.

The lithographic ink of the present invention preferably contains the resin (b) having an ethylenically unsaturated group and a hydrophilic group and the reactive diluent (c) as the varnish components. The reactive diluent (c) preferably has the property that it cures by the irradiation of an active energy beam. A typical reactive diluent (c) is a compound, namely, a so called monomer which has an ethylenically unsaturated group. The lithographic ink may also contain a resin having a hydrophilic group but not an ethylenically unsaturated group as a resin having a hydrophilic group in addition to the resin (b) having an ethylenically unsaturated group and a hydrophilic group. In the present invention, the resin (b) having an ethylenically unsaturated group and a hydrophilic group and a resin containing a hydrophilic group but not an ethylenically unsaturated group is sometimes referred to as "a resin having a hydrophilic group". In the present invention, the varnish for lithographic ink constituting the lithographic ink preferably contains a resin having a hydrophilic group and a reactive diluent.

Inclusion of the reactive diluent (c) enables adjustment of ink properties such as viscosity and levelling properties required for the lithography. Inclusion of the reactive diluent (c) is also preferable since the reactive diluent (c) cures by the irradiation of the active energy beam to contribute for the improvement of the water resistance of the cured film.

The reactive diluent (c) may be any compound as long as it has solubility in water and compatibility with the resin and it is a compound having an ethylenically unsaturated group. Use of a reactive diluent (c) having a hydrophilic skeleton such as ethylene oxide-modified skeleton or a hydrophilic group such as carboxyl group, hydroxy group, or amino group with the weight average molecular weight of 100 to 1,000 is preferable since it has both solubility in water and compatibility with the resin.

The reactive diluent (c) may preferably have 3 to 4 ethylenically unsaturated groups per molecule, and then, the cured film will enjoy ink-related physical properties and sufficient water resistance necessary the lithography. In other words, a hydrophilic polyfunctional (meth)acrylate would be a preferable candidate for the reactive diluent (c) used. The more preferred is a polyfunctional (meth)acrylate having hydroxyl group.

Preferable examples of the reactive diluent (c) include trimethylolpropane triacrylate modified with ethylene oxide, pentaerythritol triacrylate, pentaerythritol tetraacrylate modified with ethylene oxide, and the reactive diluent (c) is not limited to such examples.

In the lithographic ink, amount of the reactive diluent (c) added is preferably at least 10 mass %, more preferably at least 20 mass %, and still more preferably at least 30 mass % in view of realizing the ink viscosity suitable for the lithography. In the meanwhile, the amount of the reactive diluent (c) is preferably up to 90 mass %, more preferably up to 80 mass %, and still more preferably up to 70 mass % to obtain a cured film having good sensitivity and sufficient water resistance.

Inclusion of the polyfunctional (meth)acrylate having hydroxyl group as the reactive diluent (c) is preferable since it enables provision of a varnish for lithographic ink having a high viscosity, high fluidity, and good pigment dispersibility. The printed material prepared by using the lithographic ink containing the varnish for lithographic ink and the pigment is highly preferable due to its high gloss.

In the present invention, the varnish for lithographic ink constituting the lithographic ink preferably contains the polyfunctional (meth)acrylate having hydroxyl group and the resin containing a hydrophilic group as described above. The polyfunctional (meth)acrylate having hydroxyl group and the resin containing a hydrophilic group as described above are highly compatible, and the resulting varnish for lithographic ink will have a higher viscosity due to the interaction of the hydroxyl group and the hydrophilic group in the varnish for lithographic ink by hydrogen bond and the like. When the varnish for lithographic ink has a high viscosity, the lithographic ink of the present invention will also have a high viscosity, and this results in the increase in the ink agglutination under the high shear applied during the printing, and hence, in the improvement of the resistance to surface staining.

In the present invention, the varnish for lithographic ink has a good fluidity due to the presence of the polyfunctional (meth)acrylate having hydroxyl group. In addition, the varnish for lithographic ink has excellent pigment dispersibility. Since the pigment is dispersed and stabilized by the polar groups in the varnish for lithographic ink, the lithographic ink containing such varnish for lithographic ink exhibits good fluidity.

In the present invention, the polyfunctional (meth)acrylate having hydroxyl group in the varnish for lithographic ink is preferably at least 20 mass %, more preferably at least 30 mass %, and still more preferably at least 40 mass %. When the content is at least 20 mass %, the varnish will be provided with sufficient fluidity and pigment dispersibility. This prevents formation of agglutinate structure of the pigments in the lithographic ink which results in the reduced ink fluidity, and as a consequence, the resulting printed material will have a high gloss.

The content of the polyfunctional (meth)acrylate having hydroxyl group in the varnish for lithographic ink of the present invention is preferably up to 90 mass %, more preferably up to 80 mass %, and still more preferably up to 70 mass %. When the content is up to 90 mass %, interaction by hydrogen bond or the like between the hydroxyl group in the polyfunctional (meth)acrylate having hydroxyl group and the hydrophilic group in the resin having a hydrophilic group will be sufficient in the varnish, and the varnish will enjoy an improved viscosity. As a consequence of such improvement of the varnish viscosity, the ink containing the varnish for lithographic ink will retain its agglutination ability under the high shear during the lithography, and the resistance to surface staining will be improved.

In the lithographic ink of the present invention, content of the polyfunctional (meth)acrylate having hydroxyl group is preferably at least 20 mass %, more preferably at least 30 mass %, and still more preferably at least 40 mass % in view of the pigment dispersibility of the ink. The content is preferably up to 70 mass %, more preferably up to 60 mass %, and still more preferably up to 50 mass % in view of retaining good fluidity of the ink.

The hydroxyl value of the polyfunctional (meth)acrylate having hydroxyl group is preferably at least 50 mgKOH/g and up to 200 mgKOH/g. In view of improving the pigment dispersibility in the varnish for lithographic ink, the hydroxyl value is preferably at least 50 mgKOH/g, more preferably at least 75 mgKOH/g, and still more preferably at least 100 mgKOH/g. In view of improving fluidity of the varnish for lithographic ink, the hydroxyl value is preferably up to 200 mgKOH/g, more preferably up to 180 mgKOH/g, and still more preferably up to 160 mgKOH/g.

The polyfunctional (meth)acrylate having hydroxyl group preferably has a molecular weight of at least 100 and up to 1000. In view of the higher viscosity of the varnish for lithographic ink, the molecular weight is preferably at least 100, more preferably at least 200, and still more preferably at least 250. In view of improving the fluidity of the varnish for lithographic ink, the molecular weight is preferably up to 1000, more preferably up to 700, and still more preferably up to 500.

Preferable examples of the polyfunctional (meth)acrylate having hydroxyl group include a poly(meth)acrylate of a polyhydric alcohol such as trimethylolpropane, glycerin, pentaerythritol, diglycerin, ditrimethylolpropane, or dipentaerythritol, and an alkylene oxide-modified product thereof. More specific examples include di(meth)acrylate of trimethylolpropane, di(meth)acrylate of glycerin, di or tri(meth)acrylate of pentaerythritol, di or tri(meth)acrylate of diglycerin, di or tri(meth)acrylate of ditrimethylolpropane, di, tri, tetra, or penta(meth)acrylate of dipentaerythritol, and ethylene oxide-modified products, propylene oxide-modified products, and tetraethylene oxide-modified products thereof. Of these, the most preferred are pentaerythritol tri(meth)acrylate, diglycerin tri(meth)acrylate, and ditrimethylolpropane in view of the good fluidity and pigment dispersibility of the varnish for lithographic ink and the high viscosity of the varnish for lithographic ink, and the polyfunctional (meth)acrylate having hydroxyl group preferably contains at least one of these.

In the present invention, the varnish for lithographic ink may further contain a (meth)acrylate compound other than the polyfunctional (meth)acrylate having hydroxyl group for the purpose of viscosity adjustment. Adequate use of the (meth)acrylate compound enables improvement of the fluidity of the varnish for lithographic ink.

With regard to the number of the (meth)acrylate group in the (meth)acrylate compound, the compound is preferably at least difunctional, and more preferably trifunctonal in view of the higher sensitivity.

Exemplary such (meth)acrylate compounds include: monofunctional (meth)acrylates containing 1 to 18 carbon atoms such as methyl (meth)acrylate, ethyl (meth)acrylate, butyl (meth)acrylate, hexyl (meth)acrylate, octyl (meth)acrylate, dodecyl (meth)acrylate, stearyl (meth)acrylate, isostearyl (meth)acrylate as well as ethylene oxide-modified products and propylene oxide-modified products thereof; and also benzyl (meth)acrylate, isobornyl (meth)acrylate, cyclohexyl (meth)acrylate, and tricyclodecane monomethylol (meth)acrylate; difunctional (meth)acrylates include the (meth)acrylate compounds prepared from dihydric alcohol, glycol, and the like such as ethyleneglycol di(meth)acrylate, diethylene glycol di(meth)acrylate, triethylene glycol di(meth)acrylate, polyethylene glycol di(meth)acrylate, tripropylene glycol di(meth)acrylate, 1,3 butylene glycol di(meth)acrylate, 1,6 hexanediol di(meth)acrylate, 1,9 nonanediol di(meth)acrylate, and neopentylglycol di(meth)acrylate; trifunctional (meth)acrylates include the (meth)acrylate compounds prepared from trihydric alcohol, glycol, and the like such as trimethylolpropane tri(meth)acrylate, glycerin tri(meth)acrylate, and isocyanuric acid tri(meth)acrylate as well as ethylene oxide-modified products and propylene oxide-modified products thereof; tetrafunctional (meth)acrylates include the (meth)acrylate compounds prepared from tetrahydric alcohol, glycol, and the like such as pentaerythritol tetra(meth)acrylate, ditrimethylolpropane tetra(meth)acrylate, and diglycerin tetra(meth)acrylate as well as ethylene oxide-modified products and propylene oxide-modified products thereof; and pentafunctional (meth)acrylates include the (meth)acrylate compounds prepared from pentahydric or higher alcohol, glycol, and the like such as dipentaerythritol hexa(meth)acrylate as well as ethylene oxide-modified products and propylene oxide-modified products thereof. Of these, the most preferred are ethylene oxide-modified products of trimethylolpropane tri(meth)acrylate, ethylene oxide-modified products of pentaerythritol tetra(meth)acrylate, ethylene oxide-modified products of diglycerin tetra(meth)acrylate, and ethylene oxide-modified products of ditrimethylolpropane tetra(meth)acrylate having low viscosity and high sensitivity.

In view of improving the fluidity of the varnish for lithographic ink, content of the (meth)acrylate compound is preferably at least 5 mass %, more preferably at least 10 mass %, and still more preferably at least 15 mass %. Content of the (meth)acrylate compound is preferably up to 40 mass %, more preferably up to 35 mass %, and still more preferably up to 30 mass % in view of preventing excessively low viscosity of the varnish for lithographic ink.

The hydrophilic group of the resin having a hydrophilic group in the varnish for lithographic ink include polyethylene oxide group, polypropyrene oxide group, hydroxyl group, carboxyl group, sulfo group, and phosphate group. Of these, the most preferred is carboxyl group which exhibits good dispersibility of the pigment.

The acid value of the resin having a hydrophilic group is preferably at least 30 mgKOH/g and up to 250 mgKOH/g. In view of improving the pigment dispersibility in the varnish for lithographic ink and increasing the viscosity of the varnish for lithographic ink, the acid value is preferably at least 30 mgKOH/g, more preferably at least 60 mgKOH/g, and still more preferably at least 75 mgKOH/g. In the meanwhile, the acid value is preferably up to 250 mgKOH/g, more preferably up to 200 mgKOH/g, and still more preferably up to 150 mgKOH/g in view of improving the fluidity of the varnish for lithographic ink.

The acid value of the resin having hydrophilic group may be determined according to "3.1 neutralization titration" in the test method of JIS K 0070: 1992.

The resin having a hydrophilic group may preferably have a weight average molecular weight of at least 5,000 and up to 100,000. In view of increasing the viscosity of the varnish for lithographic ink, the weight average molecular weight is preferably at least 5,000, more preferably at least 15,000, and still more preferably at least 20,000. In view of improving the fluidity of the varnish for lithographic ink, the weight average molecular weight is preferably up to 100,000, more preferably up to 75,000, and still more preferably up to 50,000.

The weight average molecular weight can be determined by a measurement using gel permeation chromatography (GPC) and conducting the calculation in terms of polystyrene.

Examples of the resin having a hydrophilic group include acrylic resin, styrene acrylic resin, styrene maleic acid resin, rosin-modified maleic acid resin, rosin-modified acrylic resin, epoxy resin, polyester resin, polyurethane resin, and phenol resin, while the resin is not particularly limited.

Of the resins as described above, the preferred for the resin having a hydrophilic group are acrylic resin, styrene acrylic resin, and styrene maleic resin in view of availability of the monomer, low cost, easy synthesis, compatibility with other components of the ink, dispersibility of the pigment, and the like.

Of the resins as mentioned above, acrylic resin, styrene acrylic acid resin, and styrene maleic acid resin can be produced by polymerizing or copolymerizing a compound selected from a carboxyl group-containing monomer such as acrylic acid, methacrylic acid, itaconic acid, crotonic acid, maleic acid, fumaric acid, vinyl acetate, or an acid anhydride thereof, a hydroxy group-containing monomer such as 2-hydroxyethyl acrylate, an amino group-containing monomer such as dimethylaminoethyl methacrylate, mercapto group-containing monomer such as acrylic acid 2-(mercaptoacetoxy)ethyl, sulfo group-containing monomer such as acryl amide t-butyl sulfonic acid, phosphate group-containing monomer such as 2-methacryloyloxy ethyl acid phosphate, methacrylate, acrylate, styrene, acrylonitrile, vinyl acetate, and the like using a radical polymerization initiator.

More specifically, examples of the resin having a hydrophilic group include (meth)acrylic acid copolymer, (meth)acrylic acid-(meth)acrylate copolymer, styrene-(meth)acrylic acid copolymer, styrene-(meth)acrylic acid-(meth)acrylate copolymer, styrene-maleic acid copolymer, styrene-maleic acid-(meth)acrylic acid copolymer, and styrene-maleic acid-(meth)acrylate copolymer.

In the present invention, the resin having a hydrophilic group preferably has an ethylenically unsaturated group in view of improved sensitivity for the curing by the active energy beam. In other words, the resin having a hydrophilic group is preferably the resin (b) having an ethylenically unsaturated group and a hydrophilic group.

In the present invention, the fluidity of the varnish for lithographic ink is evaluated by loss tangent tan δ (= G"/G') which is the ratio of the storage elastic modulus G' measured by using viscoelastometer at 25°C and 1 rad/s by sinusoidal oscillation to the loss elastic modulus G". The value of the loss tangent tan δ is preferably at least 1.5, more preferably at least 2, and still more preferably at least 3 in view of the viscous behavior and high fluidity of the varnish. In the meanwhile, the value of tan δ of the varnish is preferably up to 30, more preferably up to 10, and still more preferably up to 5 in view of improving the varnish viscosity and improving the resistance to surface staining of the ink containing such varnish.

The viscosity of the varnish for lithographic ink is measured by using a Type B viscometer at 25°C and 0.5 rpm. The varnish viscosity is preferably at least 10 Pa.s, more preferably at least 50 Pa.s, and still more preferably at least 100 Pa.s in order to improve resistance to surface staining of the lithographic ink. In the meanwhile, the varnish viscosity is preferably up to 400 Pa.s, more preferably up to 300 Pa.s, and still more preferably up to 250 Pa.s in view of improving the fluidity of the lithographic ink.

Next, the method for producing a varnish for lithographic ink is described.

The varnish for lithographic ink is produced by dissolving the polyfunctional (meth)acrylate having hydroxyl group, the resin having a hydrophilic group, and other components with optional heating to 50 to 95°C as desired, and cooling the mixture to room temperature.

The lithographic ink of the present invention contains a varnish for lithographic ink and a pigment, and this lithographic ink has excellent fluidity despite the high viscosity. Due to the high viscosity, the lithographic ink has excellent resistance to surface staining. The printed material produced by using this lithographic ink exhibits high gloss.

The lithographic ink may preferably contain at least 50 mass % to up to 90 mass % of the varnish for lithographic ink. In view of improving the dispersibility of the pigment in the lithographic ink and resistance to surface staining in the printing, the content is preferably at least 50 mass %, more preferably at least 55 mass %, and still more preferably at least 60 mass %. In order to provide the lithographic ink with the fluidity, the content is preferably up to 90 mass %, more preferably up to 85 mass %, and still more preferably up to 80 mass %.

Preferably, the lithographic ink of the present invention may further comprise (d) at least one component selected from the group consisting of silicone fluid, alkyl acrylate, hydrocarbon solvent, and fluorocarbon. The lithographic ink of the present invention may also contain a vegetable oil or a fatty acid ester from a vegetable oil.

The component (d) has the effect of suppressing deposition of the ink to the silicone rubber which is the non-printing part in the waterless lithography plate. Presumably, the deposition of the ink to the silicone rubber is suppressed by the mechanism of covering of the silicone rubber surface in the form of a thin film upon contact of the component (d) in the ink with the silicone rubber surface, and prevention the deposition of the ink to the silicone rubber surface by the thus formed thin film that prevents surface staining of the silicone surface.

Of the components (d) as described above, alkyl acrylate is preferable since it cures simultaneously with the irradiation of the active energy beam, namely, since it improves sensitivity to the active energy beam simultaneously with the improvement in the water resistance of the cured film.

Typical compounds used for the component (d) are as described below.

Exemplary silicone fluids include dimethyl silicone, methylphenylsilicone, alkyl-modified silicone, polyether-modified silicone, aralkyl-modified silicone, fatty acid amide-modified silicone, fatty acid ester-modified silicone, fluoroalkyl-modified silicone, methyl hydrogen silicone, silanol-modified silicone, alcohol-modified silicone, amino-modified silicone, epoxy-modified silicone, epoxy polyether-modified silicone, phenol-modified silicone, carboxy-modified silicone, and mercapto-modified silicone.

Exemplary alkyl acrylates include nonyl acrylate, decyl acrylate, undecyl acrylate, dodecyl acrylate, tridecyl acrylate, tetradecyl acrylate, pentadecyl acrylate, hexadecyl acrylate, heptadecyl acrylate, octadecyl acrylate, and isooctadecyl acrylate. Exemplary alkyl methacrylates include nonyl methacrylate, decyl methacrylate, undecyl methacrylate, dodecyl methacrylate, tridecyl methacrylate, tetradecyl methacrylate, pentadecyl methacrylate, hexadecyl methacrylate, heptadecyl methacrylate, and octadecyl methacrylate.

Exemplary hydrocarbon solvents include polyolefin oil, naphthene oil, and paraffin oil.

Exemplary fluorocarbons include 1,1,1,2,2-pentafluoroethane, 1,1,1,2,2,3,3,4,4-nonafluorobutane, 1,1,1,2,2,3,3,4,4,5,5,6,6-tridecafluorohexane, 1,1,1,2,2,3,3,4,4,5,5,6,6,7,7,8,8-heptadecafluorooctane, 1,1,1,2,3,3,3-heptafluoropropane, 1,1,1,2,3,3,4,4-actafluoro-2-trifluoromethylbutane, 1,1,1,2,3,3,4,4,5,5,6,6-dodecafluoro-2-trifluoromethyl hexane, 1,1,2,2-tetrafluoroethane, 1,1,2,2,3,3,4,4-octafluorobutane, and 1,1,2,2,3,3,4,4,5,5,6,6-dodecafluorohexane.

Exemplary vegetable oils include soybean oil, linseed oil, safflower oil, tung oil, tall oil, and dehydrated castor oil.

Exemplary fatty acid esters from vegetable oil include esters of a fatty acid having an alkyl backbone containing 15 to 20 carbon atoms such as stearic acid, isostearic acid, hydroxystearic acid, oleic acid, linoleic acid, linolenic acid, or eleostearic acid with an alkyl containing 1 to 10 carbon atoms such as methyl, ethyl, propyl, isopropyl, butyl, isobutyl, tert-butyl, or 2-ethylhexyl.

Content of the component (d) in relation to the entire lithographic ink is preferably at least 0.5 mass %, more preferably at least 1 mass %, and still more preferably at least 2 mass % in view of the good resistance to surface staining of the lithographic ink, and preferably up to 10 mass %, more preferably up to 8 mass %, and still more preferably up to 5 mass % in view of the good storage stability of the lithographic ink.

Preferably, the lithographic ink of the present invention contains a surfactant. The surfactant takes in the wetting water in the non-printing part in the water lithography into the lithographic ink to form a W/O type emulsion. In other words, the surfactant functions as the emulsifier (f). When the lithography takes in an adequate amount (commonly 10 to 20 mass % of the entire ink) of the wetting water for emulsification, repellency of the non-printing part against the wetting water increases to thereby improve resistance to surface staining of the ink. This also contributes for the maintenance of good inking in the printing part.

The ratio of the hydrophilic group to the hydrophobic group in the surfactant, namely, the emulsifier (f) is represented by HLB value. The "HLB value" as used herein is a value indicating the degree of the affinity with water and oil of the surfactant, namely, the emulsifier (f). This HLB value may be a value of 0 to 20, and the value near 0 represents a higher oleophilicity while a value near 20 represents a higher hydrophilicity. The HLB value of the surfactant, namely, the emulsifier (f) is preferably at least 10 in view of dissolving the water, and also preferably up to 18 in view of dissolving in the lithographic ink.

Examples of the surfactant, namely, the emulsifier (f) include polyoxyethylene alkyl ether, polyoxyethylene lauryl ether, polyoxyethylene oleyl ether, polyoxyethylene stearyl ether, polyoxyethylene cetyl ether, polyoxyethylene palmityl ether, polyoxypropylene alkyl ether, polyoxypropylene lauryl ether, polyoxypropylene oleyl ether, polyoxypropylene stearyl ether, polyoxypropylene cetyl ether, polyoxypropylene palmityl ether, polyoxyalkylene alkyl ether, polyoxyalkylene lauryl ether, polyoxyalkylene oleyl ether, polyoxyalkylene stearyl ether, polyoxyalkylene cetyl ether, and polyoxyalkylene palmitylether; mono-, di-, and tri-alkyl ether of sorbitan acid, mono-, di-, and tri-lauryl ether of sorbitan acid, mono-, di-, and tri-oleyl ether of sorbitan acid, mono-, di-, and tri-stearyl ether of sorbitan acid, mono-, di-, and tri-cetyl ether of sorbitan acid, mono-, di-, and tri-palmityl ether of sorbitan acid; mono-, di-, and tri-alkyl ether of polyoxyethylene of sorbitan acid, mono-, di-, and tri-lauryl ether of polyoxyethylene of sorbitan acid, mono-, di-, and tri-oleyl ether of polyoxyethylene of sorbitan acid, mono-, di-, and tri-stearyl ether of polyoxyethylene of sorbitan acid, mono-, di-, and tri-cetyl ether of polyoxyethylene of sorbitan acid, and mono-, di-, and tri-palmityl ether of polyoxyethylene of sorbitan acid; and polyether-modified silicone oil. The preferred for use are those having a HLB value of at least 10 and up to 18.

In view of the intake of the wetting water in the course of printing and stabilization of the emulsification state, content of the surfactant, namely, the emulsifier (f) in the lithographic ink of the present invention is at least 0.01 mass %, more preferably at least 0.05 mass %, and still more preferably at least 0.1 mass %. In view of the excessive intake of the wetting water in the lithographic ink during the printing and incompatibility with wetting water of the lithographic ink, the content is preferably up to 5 mass %, more preferably up to 3 mass %, and still more preferably up to 1 mass %.

The lithographic ink of the present invention preferably contains a photopolymerization initiator (e) in order to improve curability of the ink, and also, a sensitizing agent to assist the effect of the photopolymerization initiator (e). Examples of such photopolymerization initiator (e) include the following types which are different in the mechanism, namely, single molecule direct cleavage type, intra-ion pair electron transfer type, hydrogen atom abstraction type, and two molecule complex type photopolymerization initiators, and the photopolymerization initiator used may be selected from these types.

The photopolymerization initiator (e) used in the present invention is preferably those generating an reactive radical, and examples include benzophenone, o-benzoyl methyl benzoate, 4,4-bis(dimethylamine)benzophenone, 4,4-bis(diethylamino)benzophenone, 4,4-dichlorobenzophenone, 4-benzoyl-4-methyl diphenyl ketone, dibenzyl ketone, fluorenone, 2,2-diethoxyacetophenone, 2,2-dimethoxy-2-phenyl-2-phenylacetophenone, 2-hydroxy-2-methylpropiophenone, p-t-butyldichloroacetophenone, thioxanthone, 2-methylthioxanthone, 2-chlorothioxanthone, 2-isopropylthioxanthone, diethylthioxanthone, benzyl, benzyldimethylcetanol, benzyl methoxyethyl acetal, benzoin, benzoin methyl ether, benzoin butyl ether, anthraquinone, 2-t-butylanthraquinone, 2-amylanthraquinone, β-chloroanthraquinone, anthrone, benzanthrone, dibenzosuberone, methylene anthrone, 4-azidobenzalacetophenone, 2,6-bis(p-azidobenzylidene)cyclohexanone, 2,6-bis(p-azidobenzylidene)-4-methyl cyclohexanone, 2-phenyl-1,2-butadione-2-(o-methoxycarbonyl)oxime, 1-phenyl-propanedione-2-(o-ethoxycarbonyl)oxime, 1,3-diphenyl-propanetrione-2-(o-ethoxycarbonyl)oxime, 1-phenyl-3-ethoxy-propanetrione-2-(o-benzoyl)oxime, Michler's ketone, 2-methyl-[4-(methylthio)phenyl]-2-morpholino-1-propanone, naphthalene sulfonyl chloride, quinoline sulfonyl chloride, N-phenylthioacridone, 4,4-azobisisobutyronitrile, diphenyl disulfide, benzthiazole disulfide, triphenylphosphine, camphorquinone, carbon tetrabromide, tribromophenyl sulfone, benzoin peroxide, and a combination of photo-reductive die such as eosin or methylene blue and a reducing agent such as ascorbic acid or triethanolamine.

Examples of the sensitizing agent include 2,4-diethylthioxanthone, isopropylthioxanthone, 2,3-bis(4-diethylaminobenzal)cyclopentanone, 2,6-bis(4-dimethylaminobenzal)cyclohexanone, 2,6-bis(4-dimethylaminobenzal)-4-methylcyclohexanone, Michler's ketone, 4,4-bis(diethylamino)-benzophenone, 4,4-bis(dimethylamino)chalcone, 4,4-bis(diethylamino)chalcone, p-dimethylaminocinnamylidene indanone, p-dimethylaminobenzylidene indanone, 2-(p-dimethylamino phenyl vinylene)-isonaphthothiazole, 1,3-bis(4-dimethylaminobenzal)acetone, 1,3-carbonyl-bis(4-diethylaminobenzal)acetone, 3,3-carbonyl-bis(7-diethylamino coumarin), N-phenyl-N-ethyl ethanolamine, N-phenylethanolamine, N-tolyldiethanolamine, isoamyl dimethylaminobenzoate, isoamyl diethylaminobenzoate, 3-phenyl-5-benzoylthiotetrazole, and 1-phenyl-5-ethoxycarbonyl thiotetrazole.

In the present invention, the photopolymerization initiator (e) and the sensitizing agent may be used alone or in combination of two or more.

Content of the photopolymerization initiator (e) in the lithographic ink is preferably 0.1 to 20 mass %. The ink will have good sensitivity and curability when the content of the photopolymerization initiator (e) is in such range. In view of improving the sensitivity of the lithographic ink, content of the photopolymerization initiator (e) is preferably at least 0.1 mass %, more preferably at least 1 mass %, and still more preferably at least 3 mass %. In view of improving the storage stability of the lithographic ink, the content is preferably up to 20 mass %, more preferably up to 15 mass %, and still more preferably up to 10 mass %.

When the sensitizing agent is added, the amount added is preferably 0.1 to 20 mass % in relation to the lithographic ink. When the amount of the sensitizing agent added in such range, the sensitizing agent will assist the effect of the photopolymerization initiator (e). In view of improving the sensitivity of the lithographic ink, content of the sensitizing agent is preferably at least 0.1 mass %, more preferably at least 1 mass %, and still more preferably at least 3 mass %. In view of improving the storage stability of the lithographic ink, the content is preferably up to 20 mass %, more preferably up to 15 mass %, and still more preferably up to 10 mass %.

Further addition of a polymerization inhibitor is preferable. Exemplary polymerization inhibitors include hydroquinone, monoester of hydroquinone, N-nitrosodiphenylamine, phenothiazine, p-t-butylcatechol, N-phenylnaphthylamine, 2,6-di-t-butyl-p-methyl phenol, chloranil, and pyrogallol. When the polymerization inhibitor is added, the amount added is preferably 0.001 to 5 mass % in relation to the lithographic ink. When the amount of the polymerization inhibitor is in such range, the ink will have storage stability.

If desired, the lithographic ink of the present invention may also contain additives such as wax, antifoaming agent, transfer improving agent, and levelling agent.

The lithographic ink of the present invention may also contain another surfactant. Inclusion of such additional surfactant suppresses agglutination of the pigment to thereby improve the fluidity of the ink. In other words, the additional surfactant functions as a pigment dispersant (g).

The pigment dispersant (g) of the present invention contains an acidic group. Preferable examples of the pigment dispersant (g) containing an acidic group include surfactants having carboxyl group, surfactants having sulfo group, and surfactants having phosphate group, and the most preferred are surfactants having phosphate group.

The azo lake pigment and the metal complex pigment preferable for use in the present invention contains a cation such as Ca²⁺, Ba²⁺, Cu²⁺, or Co²⁺ in its components, and as this cation reacts with the acidic group in the pigment dispersant (g), the pigment dispersant (g) is adsorbed on the pigment surface. Since amount of the acidic group of the pigment dispersant (g) increases in relation to the increase of the acid value of the pigment dispersant (g), adsorption of the pigment dispersant (g) on the pigment surface is conceivably accelerated by the increase in the acid value. As a consequence, the pigment surface is covered with the pigment dispersant (g) to thereby suppress the pigment agglutination.

The pigment dispersant (g) may preferably have an acid value of 5 to 200 mgKOH/g. When the pigment dispersant (g) has an acid value of at least 5 mgKOH/g, the effect of suppressing the pigment agglutination will be improved, and when the acid value is up to 200 mgKOH/g, loss of the effect of suppressing the pigment agglutination will be prevented. The acid value of the pigment dispersant (g) is preferably at least 50 mgKOH/g, more preferably at least 100 mgKOH/g, and still more preferably up to 150 mgKOH/g.

The acid value may be determined according to "3.1 neutralization titration" in JIS K 0070: 1992 "Test methods for acid value, saponification value, ester value, iodine value, hydroxyl value and unsaponifiable matter of chemical products".

When the acid value of the pigment dispersant (g) is in such range, agglutination of the pigment can be suppressed to improve the ink fluidity. As a consequence, the ink will have an improved levelling property, and the printed material prepared by using such ink will enjoy an improved gloss.

Examples of the surfactant having carboxyl group suitable for the pigment dispersant (g) include sodium octanoate, sodium decanoate, sodium laurate, sodium myristate, sodium palmitate, sodium stearate, perfluorononanoic acid, sodium N-lauroylsarcosinate, and sodium cocoyl glutamate.

Examples of the surfactant having sulfo group suitable for the pigment dispersant (g) include sodium 1-hexanesulfonate, sodium 1-octanesulfonate, sodium 1-decanesulfonate, sodium 1-dodecanesulfonate, sodium perfluorobutane sulfonate, sodium straight chain-alkylbenzenesulfonate, sodium toluenesulfonate, sodium cumenesulfonate, sodium octylbenzenesulfonate, sodium naphthalenesulfonate, disodium naphthalenedifulfonate, trisodium naphthalenetrisulfonate, and sodium butylnaphthalenesulfonate.

Examples of the surfactant having phosphate group suitable for the pigment dispersant (g) include polyoxyethylene alkylether phosphate, polyoxyethylene tridecylether phosphate, polyoxyethylene laurylether phosphate, and polyoxyethylene alkylphenylether phosphate. Of these, the preferred are polyoxyethylene alkyl ether phosphate, polyoxyethylene tridecyl ether phosphate, and polyoxyethylene lauryl ether phosphate.

The pigment dispersant (g) preferably has a basic group in addition to the acidic group. Inclusion of the basic group is preferable since the basic group in the pigment dispersant (g) contributes for improving the effect of suppressing the pigment agglutination. Examples of the basic group of the pigment dispersant (g) include functional groups containing nitrogen element such as amino group, amide group, azo group, and cyano group, and most preferred is the pigment dispersant containing amino group.

The amine value of the pigment dispersant (g) is preferably 5 to 50 mgKOH/g. When the amine value of the pigment dispersant (g) is at least 5 mgKOH/g, the pigment dispersant (g) becomes more likely to be adsorbed by the pigment having an acidic group, and the effect of preventing the pigment agglutination will be improved. In the meanwhile, use of the pigment dispersant (g) having an amine value of up to 50 mgKOH/g enables prevention of viscosity increase by the interaction with the ethylenically unsaturated group-containing resin having an acidic group. When the amine value of the pigment dispersant (g) is in such range, agglutination of the pigment can be suppressed to improve the ink fluidity. As a consequence, the ink will have an improved levelling property, and the printed material prepared by using such ink will enjoy an improved gloss.

The amine value of the pigment dispersant (g) may be determined according to the method described in "4.1 electrical potentiometric titration" in JIS K 7237: 1995 "Testing method for total amine values of amine-based hardeners of epoxide resins".

Content of the pigment dispersant (g) of the present invention is 5 to 50 mass % in relation to 100 mass % of the pigment (a). Content of the pigment dispersant (g) of at least 5 mass % is preferable in view of improving the effect for suppressing the pigment agglutination. In the meanwhile, content of the pigment dispersant (g) of up to 50 mass % is preferable in view of preventing loss of the effect for preventing the pigment agglutination. The effect of suppressing the pigment agglutination is improved by the content of the pigment dispersant (g) within such range.

The lithographic ink of the present invention preferably contains water. When water is included in the ink, adjustment of the ink viscosity is facilitated, and volume of the VOC discharged in the printing will be reduced, and consequently, production of a printed material without causing serious burden on the environment will be enabled. In addition, production of the lithographic ink of the present invention will be enabled at a reduced cost.

Content of water in the lithographic ink of the present invention is preferably at least 5 mass %. When the water content is in such range, the ink will exhibit good washability with water, and simultaneously, the VOC discharged will be reduced. The water content is more preferably at least 10 mass %. The water content is preferably up to 60 mass %, and more preferably up to 50 mass % in view of improving the ink sensitivity.

The lithographic ink of the present invention preferably contains an amine compound. When the amine compound is present, solubility in water of the resin (b) having an ethylenically unsaturated group and a hydrophilic group will be improved, and washabiliy of the lithographic ink will be improved.

The amine compound used may be a monoamine compound or a polyamine compound having two or more functionality. Of these, the preferred is use of a monoamine compound since it does not undergo crosslinking reaction with the resin (b) having an ethylenically unsaturated group and a hydrophilic group that results in the increase of the ink viscosity.

The amine compound may preferably have a molecular weight of at least 100 in view of preventing volatilization of the amine compound during the printing. However, the molecular weight of the amine compound is preferably up to 200 to facilitate removal of the amine compound in the step of drying after the printing.

Content of the amine compound in the lithographic ink of the present invention is preferably at least 0.01 mass % and more preferably at least 0.1 mass % in view of improving solubility in water of the resin (b) having an ethylenically unsaturated group and a hydrophilic group. Also, the content is preferably up to 5 mass % and more preferably up to 1 mass % to realize the water resistance of the cured film.

Examples of the preferable amine compound include triethylamine, monoethanolamine, diethanolamine, dimethylmonoethanolamine, triethanolamine, and morpholine.

The lithographic ink of the present invention may preferably have a viscosity as measured at 25°C and rotation speed of 0.5 rpm of at least 10 Pa.s and up to 100Pa.s. When the viscosity is within such range, the lithographic ink will exhibit good fluidity as well as good transfer.

The optimal viscosity for the printing ink generally differ by the type of the printing, and therefore, the printing ink is preferably used by adjusting the viscosity and concentration to those suitable for the printing type. The viscosity ranges suitable for each printing type are at least 10Pa.s and up to 100Pa.s in the case of lithography, at least 1 mPa.s and up to 50 mPa.s in the case of ink jet printing, at least 50 mPa.s and up to 1000 mPa.s in the case of gravure printing, and at least 200 mPa.s and up to 3000 mPa.s in the case of flexography. The viscosity may be measured by using a Brookfield rotary viscometer, a cone plate rotary viscometer, or the like.

Next, the method for producing the lithographic ink of the present invention is described. The lithographic ink of the present invention is obtained by dissolving the pigment (a), the resin (b) having an ethylenically unsaturated group and a hydrophilic group, and other components with optional heating to 5 to 100°C, and homogeneously mixing and dispersing these components with an agitator or kneader such as kneader, three roll mill, ball mill, planetary ball mill, beads mill, roll mill, attritor, sand mill, gate mixer, paint shaker, homogenizer, or planetary centrifugal mixer. Optional defoaming under vacuum or reduced pressure after or during the mixing and dispersion is also preferable.

The method for producing a printed material using the lithographic ink of the present invention is as described below. First, the lithographic ink of the present invention is coated on the substrate, and an active energy beam is irradiated to cure the ink and obtain the printed material having an ink cured film. Exemplary non-limiting substrates include art paper, coated paper, cast paper, synthetic paper, newspaper paper, aluminum vapor deposited paper, metal, and polypropylene or polyethylene terephthalate film. More specifically, plastic films of polyethylene terephthalate, polyethylene, polyester, polyamide, polyimide, polystyrene, polypropylene, polycarbonate, and polyvinyl acetal, plastic film-laminated papers having such plastic laminated on the paper, metals such as aluminum, zinc, and copper, metal-vapor deposited papers or plastics having such metal vapor deposited on a paper or a plastic film are incapable of absorbing the ink and thus incapable of securely fixing the ink on the substrate, and therefore, use of the lithographic ink of the present invention which can be instantaneously cured and secured by irradiation of the active energy beam is preferable.

The methods which may be used for coating the lithographic ink of the present invention on the substrate include known methods such as offset printing (lithography), flexography, gravure printing, screen printing, and bar coater. Of these, the preferred for used is lithography since the lithographic ink of the present invention can be printed in large volume at high speed and low cost. The lithography includes the one using a waterless lithography plate and the one using a water lithography plate.

The waterless lithography plate includes a substrate as well as at least an ink-repelling layer and a heat-sensitive layer disposed on the substrate. While the layer near the substrate may be either the heat-sensitive layer or the ink-repelling layer, the layers are preferably disposed in the order of the substrate, the heat-sensitive layer, the ink-repelling layer.

The substrate is not particularly limited, and any dimensionally stable known paper, metal, glass, film, or the like that has been used for the substrate of the printing plate will be the candidate. Of these substrates, the most preferred is the aluminum plate which is dimensionally stable and inexpensive. For the flexible substrate for use in light production print, the most preferred is polyethylene terephthalate film.

The photosensitive layer of the waterless lithography plate is preferably the one which has the function of efficiently absorbing the (photothermal conversion) so that the thus generated heat decomposes at least the surface of the heat-sensitive layer, increases solubility in the developing solution, or reduces the adhesive force with the ink-repelling layer. Such heat-sensitive layer may contain, for example, a composition containing an active hydrogen-containing polymer, an organic complex compound, or a photothermal converting substance.

The ink-repelling layer may preferably have hydrophobicity so that the layer repels the lithographic ink of the present invention to prevent deposition of the ink on the ink-repelling layer. The term "hydrophobicity" as used herein means that the contact angle with water is at least 60°. Accordingly, the ink-repelling layer preferably contains a hydrophobic substance. Exemplary such hydrophobic substances include silicone rubber, fluororesin, polyester resin, styrene butadiene rubber, nylon resin, nitrile rubber, polyvinyl acetate, urethane resin, ethylene vinyl acetate copolymer, polybutadiene, polyisoprene, polypropylene, and polyethylene, and among these, the most preferred is the use of a silicone rubber.

The water lithography plate includes a substrate, a photosensitive layer on the substrate, and a hydrophilic layer optionally disposed between the substrate and the photosensitive layer.

The substrate is not particularly limited and a hydrophilic plate having size stability may be used. Of such substrate, the most preferred is an aluminum plate which is dimensionally stable and inexpensive. The aluminum plate is preferably subjected to a surface treatment such as surface roughening treatment or anodization treatment. Exemplary known surface roughening treatments of an aluminum plate include mechanical, electrochemical, and chemical surface roughening treatments.

The photosensitive layer of the water lithography plate preferably has the function such that a hydrophobic area is formed by the curing of the exposed part of the photosensitive layer by absorption of the laser beam such as infrared beam used in depicting the image while the unexposed part is removed from the substrate surface in the course of either printing or development. Such photosensitive layer preferably contains an infrared absorbing agent, a polymerization initiator, and a polymerizable compound having an ethylenically unsaturated group.

The infrared absorbing agent has the function of converting the absorbed infrared beam to heat (photothermal conversion) and the function of generating radicals by being excited and transferring the energy to the polymerization initiator. The polymerization initiator is capable of generating radicals by light or heat. The generated radicals are capable of accelerating the curing of the polymerizable compounds having an ethylenically unsaturated group.

Preferably, the ink cured film on the printed material has a thickness of 0.1 to 50 µm. The ink cured film on the printed material is cured by irradiating an active energy beam. The active energy beam used may be any beam as long as the beam has an excited energy necessary for the curing reaction, and examples preferably include UV and electron beams. When the curing is conducted by using an electron beam, use of an electron beam apparatus capable of emitting an energy beam of 100 to 500 eV is preferable. In the case of the curing using UV, use of a UV irradiation apparatus such as high pressure mercury lamp, xenon lamp, metal halide lamp, or LED is preferable. When a metal halide lamp is used, the preferred is curing by using a lamp having an illuminance of 80 to 150 W/cm at a conveyer speed of 50 to 150 m/min in view of the productivity. More specifically, when the substrate used is a plastic film or a metal-containing substrate which is susceptible to expansion and contraction by the heat generated with the active energy beam irradiation, use of an electron beam or UV irradiation apparatus (LED-UV) using LED with reduced heat generation is preferable.

The method for producing printed material using the lithographic ink of the present invention may preferably further comprise the step of heat drying after coating the lithographic ink of the present invention on the substrate. The coating film will be firmly deposited on the substrate by heating the ink on the substrate to remove the volatile components in the ink. The method used for the heat drying may be any method as long as heat energy generation is involved, and examples preferably include use of hot air dryer and IR dryer. In view of the productivity, the preferred is drying at a temperature of 50 to 250°C for 5 seconds to 30 minutes.

Furthermore, the method for producing printed material using the lithographic ink of the present invention may preferably further comprise the step of removing the surplus ink with the washing water after coating the lithographic ink of the present invention on the substrate. The removal of the surplus ink with the washing water greatly reduces amount of the VOC generated in the operation, and this reduces health hazard of the operator and improves the safety.

The washing solution may preferably contain at least 90 mass % of water in relation to the total weight of the washing solution. When the content is at least 90 mass %, the operator will suffer from reduced health hazard, and the safety will be improved.

The washing solution may preferably have a pH of at least 8 and up to 13. When the pH is within such range, the lithographic ink of the present invention will have a good solubility to the basic aqueous solution since the lithographic ink of the present invention is weakly acidic. When the washing solution has a pH of at least 8, the ink will be readily soluble and washing will be facilitated. The pH is more preferably at least 9. In the meanwhile, the washing solution may preferably have a pH of up to 13 in view of reducing the damage to the printing equipment such as printer and printing plate. More preferably, the washing solution has a pH of up to 11.

### [Examples]

Next, the present invention is described in detail by referring to Examples which by no means limit the scope of the present invention.

### <Starting materials for the ink>

### Pigment I: Seika cyanine blue (manufactured by Dainichiseika Color & Chemicals Mfg. Co., Ltd.)

Resin I: 0.6 equivalent weight of glycidyl methacrylate (GMA) was reacted (addition reaction) with the carboxyl group of a copolymer comprising 25 mass % of methyl methacrylate, 25 mass % of styrene, and 50 mass % of methacrylic acid to obtain resin I having an ethylenically unsaturated group and a hydrophilic group. The resulting resin I had a weight average molecular weight of 34,000, an acid value of 102 mgKOH/g, and an iodine number of 2.0 mol/kg.

Resin II: 0.95 equivalent weight of glycidyl methacrylate was reacted (addition reaction) with the carboxyl group of a copolymer comprising 25 mass % of methyl methacrylate, 25 mass % of styrene, and 50 mass % of methacrylic acid to obtain resin II. The resulting resin II had a weight average molecular weight of 39,000, an acid value of 10 mgKOH/g, and an iodine number of 3.1 mol/kg.

Resin III: 0.9 equivalent weight of glycidyl methacrylate was reacted (addition reaction) with the carboxyl group of a copolymer comprising 25 mass % of methyl methacrylate, 25 mass % of styrene, and 50 mass % of methacrylic acid to obtain resin III. The resulting resin III had a weight average molecular weight of 38,000, an acid value of 35 mgKOH/g, and an iodine number of 2.9 mol/kg.

Resin IV: 0.8 equivalent weight of glycidyl methacrylate was reacted (addition reaction) with the carboxyl group of a copolymer comprising 25 mass % of methyl methacrylate, 25 mass % of styrene, and 50 mass % of methacrylic acid to obtain resin IV. The resulting resin IV had a weight average molecular weight of 37,000, an acid value of 62 mgKOH/g, and an iodine number of 2.5 mol/kg.

Resin V: 0.4 equivalent weight of glycidyl methacrylate was reacted (addition reaction) with the carboxyl group of a copolymer comprising 25 mass % of methyl methacrylate, 25 mass % of styrene, and 50 mass % of methacrylic acid to obtain resin V. The resulting resin V had a weight average molecular weight of 32,000, an acid value of 190 mgKOH/g, and an iodine number of 1.0 mol/kg.

Resin VI: 0.2 equivalent weight of glycidyl methacrylate was reacted (addition reaction) with the carboxyl group of a copolymer comprising 25 mass % of methyl methacrylate, 25 mass % of styrene, and 50 mass % of methacrylic acid to obtain resin VI. The resulting resin VI had a weight average molecular weight of 31,000, an acid value of 240 mgKOH/g, and an iodine number of 0.5 mol/kg.

Resin VII: 0.1 equivalent weight of glycidyl methacrylate was reacted (addition reaction) with the carboxyl group of a copolymer comprising 25 mass % of methyl methacrylate, 25 mass % of styrene, and 50 mass % of methacrylic acid to obtain resin VII. The resulting resin VII had a weight average molecular weight of 30,000, an acid value of 259 mgKOH/g, and an iodine number of 0.25 mol/kg.

Resin VIII: A copolymer comprising 25 mass % of methyl acrylate, 25 mass % of styrene, and 50 mass % of methacrylic acid was obtained. The resulting resin VIII had a weight average molecular weight of 29,000, an acid value of 282 mgKOH/g, and an iodine number of 0 mol/kg.

Resin IX: 1.0 equivalent weight of glycidyl methacrylate (GMA) was reacted (addition reaction) with the carboxyl group of a copolymer comprising 25 mass % of methyl methacrylate, 25 mass % of styrene, and 50 mass % of methacrylic acid. The resulting resin IX had a weight average molecular weight of 40,000, an acid value of 0 mgKOH/g, and an iodine number of 3.2 mol/kg.

Reactive diluent I: "Miramer" (Registered Trademark) M340 (manufactured by Miwon)
Reactive diluent II: "Miramer" (Registered Trademark) M4004 (manufactured by Miwon) Photopolymerization initiator I: "IRGACURE" (Registered Trademark) 907 (manufactured by BASF) Sensitizing agent I: diethylaminobenzophenone (manufactured by Tokyo Chemical Industry Co., Ltd.) Polymerization inhibitor I: p-methoxyphenol (manufactured by Wako Pure Chemical Industries, Ltd.)
Additive I: lauryl acrylate (manufactured by Wako Pure Chemical Industries, Ltd.)
Amine compound I: diethanolamine (manufactured by Tokyo Chemical Industry Co., Ltd.)

### <Measurement of weight average molecular weight>

The weight average molecular weight of the resin is the value measured by gel permeation chromatography (GPC) using tetrahydrofuran for the mobile phase. The column used was Shodex KF-803, and the weight average molecular weight was calculated in terms of polystyrene.

### <Test for lithography adaptability>

A waterless lithography plate (TAN-E manufactured by Toray Industries, Inc.) was mounted on an offset press (Oliver 266EPZ manufactured by SAKURAI GRAPHIC SYSTEMS CORPORATION), and 10000 coated papers were printed by using inks respectively having the composition of Examples 1 to 8 and Comparative Examples 1 to 2 to evaluate the lithography adaptability and the printed material.

### <Test for flexography adaptability>

A photosensitive resin plate (Toreleaf (Registered Trademark) DWF95DIII manufactured by Toray Industries, Inc.) was mounted on a flexography tester (Flexiproof 100 manufactured by Print Coat Instruments Ltd.), and printing on a PET (polyethylene terephthalate) film (Novaclear (Registered Trademark) manufactured by Mitsubishi Chemical Corporation; thickness, 100 µm) was conducted by using Anirox roll (line number, 400) and inks of Examples 9 to 11 and Comparative Examples 3 to 4.

### <Test for gravure adaptability>

Printing inks of Examples 12 to 14 and Comparative Examples 5 to 6 were printed on a PET (polyethylene terephthalate) film (Novaclear (Registered Trademark) manufactured by Mitsubishi Chemical Corporation; thickness, 100 µm) by using a gravure tester GP-10 (manufactured by KURABO INDUSTRIES LTD.) having a helio gravure (175 lines/inch), and the inks were dried by using a dryer.

### <Test for inkjet adaptability>

Printing inks of Examples 15 to 17 and Comparative Examples 7 to 8 were printed on a PET film (Novaclear (Registered Trademark) manufactured by Mitsubishi Chemical Corporation; thickness, 100 µm) by using an ink-jet printer (manufactured by Canon Inc.) which has been modified.

The evaluation was conducted as described below.

### (1) Sensitivity

The printed material was irradiated with UV by using a UV irradiation apparatus manufactured by Ushio (120 W/cm, 1 ultra-high metal halide lamp) under the condition of the belt conveyer speed of 0 to 150 m/min to determine the belt conveyer speed when the ink on the printed material became sufficiently cured such that the ink was no longer peelable when a cellophane adhesive tape ("Sellotape" (Registered Trademark) No.405) was adhered onto the coated paper and then peeled from the coated paper. In this case, higher belt conveyer speed indicates higher sensitivity since the curing can be accomplished with reduced exposure. The sensitivity was evaluated insufficient when the belt conveyer speed was less than 100 m/min; good when the belt conveyer speed was at least 100 m/min and less than 120 m/min; and excellent when the belt conveyer speed was at least 120 m/min since the printed material having such sensitivity can be used in a power-saving UV printer.

### (2) Washability with water

Washing method A: the ink remaining on the roller of the printer after the lithography adaptability test using the inks having the composition shown in Examples 1 to 8 and Comparative Examples 1 to 2 was washed with water, and the washability of the ink with water was evaluated by 3 grades.
3: the ink was entirely removed by washing once with water
2: the ink was entirely removed by washing twice with water
1: the ink residue remained even after washing three times with water

Washing method B: the printing ink on the uncured or undried printed material was wiped off by using a cloth impregnated with 1 mass % aqueous solution of a commercially available basic detergent (Magiclean manufactured by Kao Corporation) (pH=10.5), and the washability of the ink with water was evaluated by 3 grades.
3: the ink was entirely removed by wiping once
2: the ink was entirely removed by wiping twice
1: the ink residue remained even after wiping three times

### (3) Water resistance of the film

The ink cured film on the printed material was retained in water at 25°C, and the water resistance was evaluated by 3 grades. Elution of the ink into the water was visually confirmed.
3: no ink elution was observed before 24 hours
2: no ink elution was observed before 12 hours, but the ink was partly eluted within 24 hours
1: ink elution was observed before 12 hours

### (4) Resistance to surface staining

Cyan density in the non-printing part of the printed material was evaluated for the case when the cyan density in the solid part was 2.0 by using a reflection densitometer (SpectroEye manufactured by GretagMacbeth). The resistance to surface staining was good when the reflected density was up to 0.5 and excellent when the reflected density was up to 0.3.

### (5) Viscosity

A cone plate (cone angle, 1°; diameter, 40 mm) was mounted on Rheometer-MCR301 manufactured by Anton Paar, and the viscosity at 25°C and 5 rpm was measured for 0.15 ml of the ink.

### [Example 1 (Comparative Example)]

Components of the ink composition shown in Table 1 were weighed and passed through gap 1 of a three roll mill "EXAKT" (Registered Trademark) M-80S (manufactured by EXAKT) three times to obtain the lithographic ink.

The resulting lithographic ink was subjected to the lithography adaptability test as described above to evaluate the sensitivity, the washability with water, the water resistance of the film, and resistance to surface staining. The results are shown in Table 1.

The thus prepared lithographic ink had an adequate viscosity of 51 Pa.s. The sensitivity was excellent with the belt conveyer speed of 130 m/min. With regard to the washability with water, all remaining ink on the roller could be washed by one washing with water. With regard to the water resistance of the film, ink elution from the cured ink film in water at 25°C was not recognized even after 24 hours. The resistance to surface staining was excellent with the reflection density in the non-printing area of 0.2.

### [Examples 2 to 7 (Comparative Examples)]

The procedure of Example 1 was repeated except that the resin II to VII were used instead of the resin I and concentration of the ethylenically unsaturated group (iodine number) and concentration of the hydrophilic group (acid value) were as shown in Table 1 to evaluate the sensitivity, the washability with water, the water resistance of the film, and the resistance to surface staining. The sensitivity and the water resistance of the film tended to increase with increase in the concentration of the ethylenically unsaturated group and the washability with water and the resistance to the surface staining tended to improve with the increase in the concentration of the hydrophilic group. As a lithographic ink having the sensitivity, the washability with water, the water resistance of the film, and the resistance to the surface staining, preferable results were realized in Examples 3 to 6, and more preferable results were realized in Examples 4 and 5.

### [Example 8 (Comparative Example)]

The procedure of Example 1 was repeated except that lauryl acrylate was added as an additive to evaluate the sensitivity, the washability with water, the water resistance, and resistance to surface staining. The thus prepared lithographic ink had an adequate viscosity of 47 Pa.s. The sensitivity was excellent with the belt conveyer speed of 125 m/min. With regard to the washability with water, all remaining ink on the roller could be washed by one washing with water. With regard to the water resistance of the film, ink elution from the cured ink film in water at 25°C was not recognized even after 24 hours. The resistance to surface staining was excellent with the reflection density in the non-printing part of 0.1.

### [Comparative Example 1]

The procedure of Example 1 was repeated except that resin I was replaced with resin VIII so that the resin had a weight average molecular weight of 29,000, an acid value of 282 mgKOH/g, and an iodine number of 0 mol/kg to evaluate the sensitivity, the washability with water, the water resistance of the film, and the resistance to surface staining. The printing ink prepared had the viscosity as high as 114 Pa.s which was a level unsuitable for the lithography. With regard to the washability with water, all remaining ink on the roller could be washed by one washing with water. The resistance to surface staining was excellent with the reflection density in the non-printing part of 0.2. However, the sensitivity was insufficient with the belt conveyer speed of 75 m/min. The water resistance of the film was also insufficient, and ink elution from the cured ink film in water at 25°C was recognized before 12 hours.

### [Comparative Example 2]

The procedure of Example 1 was repeated except that resin I was replaced with resin IX so that the resin had a weight average molecular weight of 40,000, an acid value of 0 mgKOH/g, and an iodine number of 3.2mol/kg to evaluate the sensitivity, the washability with water, the water resistance of the film, and the resistance to surface staining. The printing ink prepared had a viscosity as low as 9Pa.s unsuitable for the lithography. The sensitivity was excellent with the belt conveyer speed of 150 m/min. With regard to the water resistance of the film, ink elution from the cured ink film in water at 25°C was not recognized even after 24 hours. However, washability with water was insufficient with the ink residue remaining on the roller even after 3 washings with water. The resistance to surface staining was insufficient with the reflection density in the non-printing part of 0.8.

### [Example 9 (Comparative Example)]

Components of the ink composition shown in Table 2-1 were weighed and mixed for dispersion by using a paint conditioner to thereby produce a printing ink.

The resulting ink was subjected to the flexography adaptability test to evaluate the sensitivity, the washability with water, and the water resistance of the film. The results are shown in Table 2-1.

The thus prepared printing ink had a suitable viscosity of 1420 mPa.s. The sensitivity was excellent with the belt conveyer speed of 120 m/min. With regard to the washability with water, the ink on the printed material could be washed by one washing. With regard to the water resistance of the film, ink elution from the cured ink film in water at 25°C was not recognized even after 24 hours.

### [Examples 10 and 11 (Comparative Examples)]

The procedure of Example 9 was repeated except that the resin III or IV were used instead of the resin I and concentration of the ethylenically unsaturated group (iodine number) and concentration of the hydrophilic group (acid value) were as shown in Table 2-1 to evaluate the sensitivity, the washability with water, and the water resistance of the film. The sensitivity and the water resistance of the film tended to increase with increase in the concentration of the ethylenically unsaturated group and the washability with water tended to improve with the increase in the concentration of the hydrophilic group.

### [Comparative Example 3]

The procedure of Example 9 was repeated except that the resin VIII was used instead of the resin I so that the resin had a weight average molecular weight of 29,000, an acid value of 282 mgKOH/g, and an iodine number of 0 mol/kg to evaluate the sensitivity, the washability with water, and the water resistance of the film. The ink prepared had a viscosity as high as 4090 mPa.s, and the ink was unsuitable for use in flexography. With regard to the washability with water, the ink on the printed material could be washed by one washing. However, the sensitivity was insufficient with the belt conveyer speed of 40 m/min. With regard to the water resistance of the film, ink elution from the cured ink film in water at 25°C was recognized before 12 hours.

### [Comparative Example 4]

The procedure of Example 9 was repeated except that the resin IX was used instead of the resin I so that the resin had a weight average molecular weight of 40,000, an acid value of 0 mgKOH/g, and an iodine number of 3.2 mol/kg to evaluate the sensitivity, the washability with water, and the water resistance of the film. The ink prepared had a viscosity as low as 170 mPa.s, and the ink was unsuitable for use in flexography. The sensitivity was excellent with the belt conveyer speed of 140 m/min. With regard to the water resistance of the film, ink elution from the cured ink film in water at 25°C was not recognized even after 24 hours. However, with regard to the washability with water, ink residue was found after repetitive washing.

### [Example 12 (Comparative Example)]

The ink was prepared by repeating the procedure of Example 9 except that the ink composition used was the one shown in Table 2-1, and evaluation for adaptability to gravure printing was used instead of the evaluation for flexography to thereby evaluate sensitivity, washability with water, and the water resistance of the film. The printing ink prepared had a suitable viscosity of 570 mPa.s. The sensitivity was excellent with the belt conveyer speed of 120 m/min. With regard to the washability with water, the ink on the printed material could be washed by one washing. With regard to the water resistance of the film, ink elution from the cured ink film in water at 25°C was not recognized even after 24 hours.

### [Examples 13 and 14 (Comparative Examples)]

The ink was prepared by repeating the procedure of Example 12 except that the ink composition used was the one shown in Table 2-1 and the ethylenically unsaturated group concentration (iodine number) and the hydrophilic group concentration (acid value) were as shown in Table 2-1 to evaluate the sensitivity, the washability with water, and water resistance of the film. The sensitivity and the water resistance of the film tended to increase with increase in the concentration of the ethylenically unsaturated group and the washability with water tended to improve with the increase in the concentration of the hydrophilic group.

### [Comparative Example 5]

The procedure of Example 12 was repeated except that the ink composition used was the one shown in Table 2-2 so that the resin had a weight average molecular weight of 29,000, an acid value of 282 mgKOH/g, and an iodine number 0 mol/kg to evaluate the sensitivity, the washability with water, and the water resistance of the film. The ink prepared had a viscosity as high as 1280 mPa.s, and the ink was unsuitable for use in gravure printing. With regard to the washability with water, the ink on the printed material could be washed by one washing. However, the sensitivity was insufficient with the belt conveyer speed of 50 m/min. With regard to the water resistance of the film, ink elution from the cured ink film in water at 25°C was recognized before 12 hours.

### [Comparative Example 6]

The procedure of Example 12 was repeated except that the ink composition used was the one shown in Table 2-2 so that the resin had a weight average molecular weight of 40,000, an acid value of 0 mgKOH/g, and an iodine number of 3.2 mol/kg to evaluate the sensitivity, the washability with water, and the water resistance of the film. The ink prepared had a viscosity as low as 41 mPa.s, and the ink was unsuitable for use in gravure printing. The sensitivity was excellent with the belt conveyer speed of 140 m/min. With regard to the water resistance of the film, ink elution from the cured ink film in water at 25°C was not recognized even after 24 hours. However, with regard to the washability with water, ink residue was found after repetitive washing.

### [Example 15 (Comparative Example)]

The ink was prepared by repeating the procedure of Example 9 except that the ink composition used was the one shown in Table 2-1, and evaluation for adaptability to inkjet printing was used instead of the evaluation for flexography to evaluate the sensitivity, the washability with water, and the water resistance of the film. The sensitivity was excellent with the belt conveyer speed of 120 m/min. With regard to the washability with water, the ink on the printed material could be washed by one washing. With regard to the water resistance of the film, ink elution from the cured ink film in water at 25°C was not recognized even after 24 hours.

### [Examples 16 and 17 (Comparative Examples)]

The ink was prepared by repeating the procedure of Example 15 except that the ink composition used was the one shown in Table 2-1 and the ethylenically unsaturated group concentration (iodine number) and the hydrophilic group concentration (acid value) were as shown in Table 2-1 to evaluate the sensitivity, the washability with water, and the water resistance of the film. The sensitivity and the water resistance of the film tended to increase with increase in the concentration of the ethylenically unsaturated group and the washability with water tended to improve with the increase in the concentration of the hydrophilic group.

### [Comparative Example 7]

The procedure of Example 15 was repeated except that the ink composition used was the one shown in Table 2-2 so that the resin had a weight average molecular weight of 29,000, an acid value of 282 mgKOH/g, and an iodine number of 0 mol/kg to evaluate the sensitivity, the washability with water, and the water resistance of the film. The ink prepared had a viscosity as high as 235 mPa.s, and the ink was unsuitable for use in inkjet printing. With regard to the washability with water, the ink on the printed material could be washed by one washing. However, the sensitivity was insufficient with the belt conveyer speed of 40 m/min. With regard to the water resistance of the film, ink elution from the cured ink film in water at 25°C was recognized before 12 hours.

### [Comparative Example 8]

The procedure of Example 15 was repeated except that the ink composition used was the one shown in Table 2-2 so that the resin had a weight average molecular weight of 40,000, an acid value of 0 mgKOH/g, and an iodine number of 3.2 mol/kg to evaluate the sensitivity, the washability with water, and the water resistance of the film. The ink prepared had a viscosity as low as 0.7 mPa.s, and the ink was unsuitable for use in inkjet printing. The sensitivity was excellent with the belt conveyer speed of 130 m/min. With regard to the water resistance of the film, ink elution from the cured ink film in water at 25°C was not recognized even after 24 hours. However, with regard to the washability with water, ink residue was found after repetitive washing.

The composition of the components used and the evaluation results of Examples and the Comparative Examples are shown in the following Tables.

**[Table 1]**

| | | Example (Comparative Example) | | | | | | | | Comparative Example | |
|---|---|---|---|---|---|---|---|---|---|---|---|
| | | 1 | 2 | 3 | 4 | 5 | 6 | 7 | 8 | 1 | 2 |
| Composition (Mass %) | Seika cyanine blue | 20 | 20 | 20 | 20 | 20 | 20 | 20 | 20 | 20 | 20 |
| | Resin I | 12 | | | | | | | 12 | | |
| | Resin II | | 12 | | | | | | | | |
| | Resin III | | | 12 | | | | | | | |
| | Resin IV | | | | 12 | | | | | | |
| | Resin V | | | | | 12 | | | | | |
| | Resin VI | | | | | | 12 | | | | |
| | Resin VII | | | | | | | 12 | | | |
| | Resin VIII | | | | | | | | | 12 | |
| | Resin IX | | | | | | | | | | 12 |
| | Reactive diluent I | 24 | 24 | 24 | 24 | 24 | 24 | 24 | 24 | 24 | 24 |
| | Reactive diluent II | 33 | 33 | 33 | 33 | 33 | 33 | 33 | 29 | 33 | 33 |
| | Photopolymerization initiator I | 5 | 5 | 5 | 5 | 5 | 5 | 5 | 5 | 5 | 5 |
| | Sensitizing agent I | 5 | 5 | 5 | 5 | 5 | 5 | 5 | 5 | 5 | 5 |
| | Polymerization inhibitor I | 1 | 1 | 1 | 1 | 1 | 1 | 1 | 1 | 1 | 1 |
| | Additive I | | | | | | | | 4 | | |
| Evaluation | Acid value (mgKOH/g) | 102 | 10 | 35 | 62 | 190 | 240 | 259 | 102 | 282 | 0 |
| | Iodine value (mol/kg) | 2.0 | 3.1 | 2.9 | 2.5 | 1.0 | 0.5 | 0.25 | 2.0 | 0.0 | 3.2 |
| | Sensitivity (m/min) | 130 | 150 | 145 | 135 | 125 | 115 | 100 | 125 | 75 | 150 |
| | Washability with water (Washing method A) | 3 | 2 | 2 | 2 | 3 | 3 | 3 | 3 | 3 | 1 |
| | Washability with water (Washing method B) | 3 | 2 | 3 | 3 | 3 | 3 | 3 | 3 | 3 | 1 |
| | Water resistance of the resin | 3 | 3 | 3 | 3 | 3 | 3 | 2 | 3 | 1 | 3 |
| | Resistance to surface staining | 0.2 | 0.5 | 0.4 | 0.3 | 0.2 | 0.2 | 0.2 | 0.1 | 0.2 | 0.8 |
| | Viscosity (Pa.s) | 51 | 17 | 27 | 39 | 72 | 88 | 94 | 47 | 114 | 9 |

**[Table 2-1]**

| | | Example (Comparative Example) | | | | | | | | |
|---|---|---|---|---|---|---|---|---|---|---|
| | | 9 | 10 | 11 | 12 | 13 | 14 | 15 | 16 | 17 |
| Composition (Mass %) | Pigment I | 10 | 10 | 10 | 10 | 10 | 10 | 7.5 | 7.5 | 7.5 |
| | Resin I | 6 | | | 5 | | | 3 | | |
| | Resin III | | 6 | | | 5 | | | 3 | |
| | Resin VII | | | 6 | | | 5 | | | 3 |
| | Resin VIII | | | | | | | | | |
| | Resin IX | | | | | | | | | |
| | Reactive diluent I | 20 | 20 | 20 | 14 | 14 | 14 | 10.5 | 10.5 | 10.5 |
| | Reactive diluent II | 36 | 36 | 36 | 37 | 37 | 37 | 32 | 32 | 32 |
| | Water | 20 | 20 | 20 | 27 | 27 | 27 | 37 | 37 | 37 |
| | Amine compound I | 2 | 2 | 2 | | | | 1 | 1 | 1 |
| | Photopolymerization initiator I | 5 | 5 | 5 | 6 | 6 | 6 | 8 | 8 | 8 |
| | Sensitizing agent I | 1 | 1 | 1 | 1 | 1 | 1 | 1 | 1 | 1 |
| | Polymerization inhibitor I | 0.1 | 0.1 | 0.1 | 0.1 | 0.1 | 0.1 | 0.1 | 0.1 | 0.1 |
| Evaluation | Acid value (mgKOH/g) | 102 | 35 | 259 | 102 | 35 | 259 | 102 | 35 | 259 |
| | Iodine value (mol/kg) | 2.0 | 2.9 | 0.25 | 2.0 | 2.9 | 0.25 | 2.0 | 2.9 | 0.25 |
| | Sensitivity (m/min) | 120 | 140 | 80 | 120 | 130 | 80 | 120 | 130 | 70 |
| | Washability with water (Washing method B) | 3 | 2 | 3 | 3 | 2 | 3 | 3 | 2 | 3 |
| | Water resistance of the resin | 3 | 3 | 2 | 3 | 3 | 2 | 3 | 3 | 2 |
| | Viscosity (mPa.s) | 1420 | 460 | 2900 | 570 | 225 | 790 | 17 | 3 | 35 |

**[Table 2-2]**

| | | Comparative Example | | | | | |
|---|---|---|---|---|---|---|---|
| | | 3 | 4 | 5 | 6 | 7 | 8 |
| Composition (Mass %) | Seika cyanine blue | 10 | 10 | 10 | 10 | 7.5 | 7.5 |
| | Resin I | | | | | | |
| | Resin III | | | | | | |
| | Resin VII | | | | | | |
| | Resin VIII | 6 | | 5 | | 3 | |
| | Resin IX | | 6 | | 5 | | 3 |
| | Reactive diluent I | 20 | 20 | 16 | 16 | 10.5 | 10.5 |
| | Reactive diluent II | 36 | 36 | 37 | 37 | 32 | 32 |
| | water | 20 | 20 | 27 | 27 | 37 | 37 |
| | Amine compound I | 2 | 2 | | | 1 | 1 |
| | Photopolymerization initiator I | 5 | 5 | 6 | 6 | 8 | 8 |
| | Sensitizing agent I | 1 | 1 | 1 | 1 | 1 | 1 |
| | Polymerization inhibitor I | 0.1 | 0.1 | 0.1 | 0.1 | 0.1 | 0.1 |
| Evaluation | Acid value (mgKOH/g) | 282 | 0 | 282 | 0 | 282 | 0 |
| | Iodine value (mol/kg) | 0.0 | 3.2 | 0.0 | 3.2 | 0.0 | 3.2 |
| | Sensitivity (m/min) | 40 | 140 | 50 | 140 | 40 | 130 |
| | Washability with water | 3 | 1 | 3 | 1 | 3 | 1 |
| | Water resistance of the resin | 1 | 3 | 1 | 3 | 1 | 3 |
| | Viscosity (mPa.s) | 4090 | 170 | 1280 | 41 | 235 | 0.7 |

### <Starting materials for the varnish>

Polyfunctional (meth)acrylate 1: a mixture of pentaerythritol triacrylate and pentaerythritol tetraacrylate "Miramer" (Registered Trademark) M340 (manufactured by Miwon) having hydroxyl group; hydroxyl value, 115 mgKOH/g; molecular weight, 298
Polyfunctional (meth)acrylate 2: a mixture of pentaerythritol triacrylate and pentaerythritol tetraacrylate "ARONIX" (Registered Trademark) M-306 (manufactured by Toagosei Company, Limited) having hydroxyl group; hydroxyl value, 171 mgKOH/g; molecular weight, 298
Polyfunctional (meth)acrylate 3: a mixture of dipentaerythritol pentaacrylate and dipentaerythritol hexaacrylate "ARONIX" (Registered Trademark) M-403 (manufactured by Toagosei Company, Limited) having hydroxyl group; hydroxyl value, 53 mgKOH/g; molecular weight, 524
Polyfunctional (meth)acrylate 4: a mixture of dipentaerythritol pentaacrylate and dipentaerythritol hexaacrylate "ARONIX" (Registered Trademark) M-402 (manufactured by Toagosei Company, Limited) having hydroxyl group; hydroxyl value, 28 mgKOH/g; molecular weight, 524
Polyfunctional (meth)acrylate 5: glycerin dimethacrylate "NK ester" (Registered Trademark) 701 (manufactured by SHIN-NAKAMURA CHEMICAL CO., LTD.) having hydroxyl group; hydroxyl value, 240 mgKOH/g; molecular weight, 228
Polyfunctional (meth)acrylate 6: pentaerythritol tetraacrylate modified with ethylene oxide "Miramer" (Registered Trademark) M4004 (manufactured by Miwon) having no hydroxyl group; molecular weight, 571

Resin 1: 0.55 equivalent weight of glycidyl methacrylate was reacted (addition reaction) with the carboxyl group of a copolymer comprising 25 mass % of methyl methacrylate, 25 mass % of styrene, and 50 mass % of methacrylic acid to produce resin 1 having an ethylenically unsaturated group and a hydrophilic group. The resulting resin 1 had an weight average molecular weight of 34,000, an acid value of 105 mgKOH/g, and an iodine number of 2.0 mol/kg.

Resin 2: 0.5 equivalent weight of glycidyl methacrylate was reacted (addition reaction) with the carboxyl group of a copolymer comprising 25 mass % of methyl methacrylate, 25 mass % of styrene, and 50 mass % of methacrylic acid to produce resin 2 having an ethylenically unsaturated group and a hydrophilic group. The resulting resin 2 had a weight average molecular weight of 53,000, an acid value of 114 mgKOH/g, an iodine number of 1.8 mol/kg.

Resin 3: Resin 3 having a hydrophilic group comprising 25 mass % of methyl methacrylate, 25 mass % styrene, and 50 mass % of methacrylic acid was produced. The resulting resin 3 had a weight average molecular weight of 24,000 and an acid value of 210 mgKOH/g.

Resin 4: VS-1057 (manufactured by SEIKO PMC CORPORATION, acrylic resin having a hydrophilic group with a weight average molecular weight of 18000 and an acid value of 40 mgKOH/g)

Resin 5: Resin 5 having a hydrophilic group comprising 25 mass % of methyl methacrylate, 20 mass % of styrene, and 55 mass % of methacrylic acid was produced. The resulting resin 5 had a weight average molecular weight of 9,000 and an acid value of 262 mgKOH/g.
Resin 6: ISO-DAP (manufactured by Daiso Co.,Ltd., diallyl phthalate resin having no hydrophilic group with a weight average molecular weight of 30,000 and acid value 0 mgKOH/g)
Polymerization inhibitor 1: p-methoxy phenol (manufactured by Wako Pure Chemical Industries, Ltd.)

### <Measurement of the weight average molecular weight>

The weight average molecular weight of the resin is the value measured by gel permeation chromatography (GPC) using tetrahydrofuran for the mobile phase. The column used was Shodex KF-803, and the weight average molecular weight was calculated in terms of polystyrene.

### <Evaluation of the varnish>

### (1) Fluidity

Parallel plates (gap, 0.1 mm; diameter, 25 mm) were mounted on Rheometer-MCR301 manufactured by Anton Paar, and the loss tangent tan δ at 25 °C, a strain of 1%, and an angular velocity of 1 rad/s was measured for 0.05 ml of varnish for lithographic ink measured by an ink pipette. The fluidity is good at the tan δ value of 3 to 5, better at 5 to 10, and very good at 10 or higher.

### (2) Viscosity

Cylinder spindle No. 4 was mounted on Model B viscometer DV-II manufactured by BROOKFIELD, and viscosity at 25°C and 0.5 rpm of the varnish for lithographic ink was measured. This viscosity is preferably 10 to 400 Pa.s, more preferably 50 to 300 Pa.s, and still more preferably 100 to 250Pa.s since both surface staining resistance and the fluidity of the lithographic ink are favorable in such range.

### <Starting materials for the ink>

### Pigment 1: Seika cyanine blue 4920 (manufactured by Dainichiseika Color & Chemicals Mfg. Co., Ltd.)

Photopolymerization initiator 1: "IRGACURE" (Registered Trademark) 907 (manufactured by BASF)
Photopolymerization initiator 2: "IRGACURE" (Registered Trademark) TPO-L (manufactured by BASF)
Sensitizing agent 1: diethylaminobenzophenone (manufactured by Tokyo Chemical Industry Co., Ltd.)
Additive 1: lauryl acrylate (manufactured by Wako Pure Chemical Industries, Ltd.)
Emulsifier 1: "RHEODOL" (Registered Trademark) Super-TW-L120 (manufactured by Kao Corporation) having a HLB value of 16.7
Wax 1: PTFE wax, KTL-4N (manufactured by KITAMURA LIMITED)

### <Waterless lithography test>

A waterless lithography plate (TAN-E manufactured by Toray Industries, Inc.) was mounted on an offset press (Oliver 266EPZ manufactured by SAKURAI GRAPHIC SYSTEMS CORPORATION), and 5000 coated papers were printed by using inks respectively having the composition of Examples 18 to 26, Reference Examples 1 to 3, and Comparative Examples 9 to 11. The ink was cured by UV irradiation using a UV irradiation apparatus manufactured by Ushio (120 W/cm, 1 ultra-high pressure metal halide lamp) at a belt conveyer speed of 80 m/min to obtain the printed material. The evaluation method was as described below.

### <Water lithography test>

A water lithography plate (XP-F manufactured by FUJIFILM Corporation) was mounted on an offset press (Oliver 266EPZ, manufactured by SAKURAI GRAPHIC SYSTEMS CORPORATION), and 5000 coated papers were printed with inks respectively having the composition of Examples 27 to 29, Reference Examples 4, and Comparative Examples 12 and 13 by using tap water admixed with 3 weight% of an etching solution (SOLAIA-505, manufactured by T&K TOKA) for the wetting water. The ink was cured by UV irradiation using a UV irradiation apparatus manufactured by Ushio (120 W/cm, 1 ultra-high pressure metal halide lamp) at a belt conveyer speed of 80 m/min to obtain the printed material.

### <Ink evaluation>

### (1) Viscosity

A cone plate (cone angle, 1°; diameter, 40 mm) was mounted on Rheometer-MCR301 manufactured by Anton Paar, and the viscosity at 25°C and 0.5 rpm was measured for 0.15 ml of the ink measured by an ink pipette.

### (2) Surface staining concentration

Cyan density in the non-printing part of the printed material was evaluated for the case when the cyan density in the solid part of the printed material was 2.0 by using a reflection densitometer (SpectroEye manufactured by GretagMacbeth). The resistance to surface staining was inferior when the reflected density was in excess of 0.15, good when the reflected density was up to 0.10, and excellent when the reflected density was up to 0.05.

### (3) Gloss

The ink cured film on the printed material was measured for its gross value by using a precision gloss meter GM-26D (manufactured by MURAKAMI COLOR RESEARCH LABORATORY). The gloss was evaluated good when the gloss value was at least 30 and excellent when the gloss value was at least 35.

### <Preparation of the varnish>

Resin 1, polyfunctional (meth)acrylate 1, and polymerization inhibitor 1 were weighed in the ratio shown in Table 3. The resin 1 and the polymerization inhibitor 1 were added to the polyfunctional (meth)acrylate 1 at 90°C, and after dissolution by agitation, the varnish for lithographic ink 1 was obtained by cooling to room temperature.

The thus prepared varnish for lithographic ink 1 exhibited good fluidity with the tan δ of 3.2 and excellent viscosity of 154 Pa.s.

Varnishes 2 to 5 were prepared by repeating the procedure of the varnish 1 except that the type of the polyfunctional (meth)acrylate having hydroxyl group was changed to polyfunctional (meth)acrylates 2 to 5 as shown in Table 3. The viscosity and the tan δ value of the varnish tended to increase with the increase in the hydroxyl value of the polyfunctional (meth)acrylate having hydroxyl group, while the viscosity of the varnish tended to increase and the tan δ value tended to decrease with the increase in the molecular weight of the polyfunctional (meth)acrylate having hydroxyl group.

The varnishes 6 to 8 were prepared by repeating the procedure of the varnish 1 except that the content of the polyfunctional (meth)acrylate having hydroxyl group 1 was changed as shown in Table 3. The viscosity of the varnish tended increase while the tan δ value tended to decrease with the increase in the content of the polyfunctional (meth)acrylate having hydroxyl group.

The varnishes 9 to 13 were prepared by repeating the procedure of the varnish 1 except that the type of the resins was changed to that of resins 2 to 6 as shown in Table 3. The viscosity and the tan δ value tended to increase with the increase in the acid value of the resin, and the viscosity of the varnish tended to increase with the increase in the molecular weight of the resin. In the case of the varnish 13 wherein the acid value of the resin was 0, the varnish viscosity was less than 10 Pa.s.

**[Table 3]**

| | | Varnish 1 | Varnish 2 | Varnish 3 | Varnish 4 | Varnish 5 | Varnish 6 | Varnish 7 | Varnish 8 | Varnish 9 | Varnish 10 | Varnish 11 | Varnish 12 | Varnish 13 |
|---|---|---|---|---|---|---|---|---|---|---|---|---|---|---|
| Composition (Mass %) | Polyfunctional (meth)acrylate 1 | 64 | | | | | 78 | 33 | 18 | 64 | 64 | 64 | 64 | 64 |
| | Polyfunctional (meth)acrylate 2 | | 64 | | | | | | | | | | | |
| | Polyfunctional (meth)acrylate 3 | | | 64 | | | | | | | | | | |
| | Polyfunctional (meth)acrylate 4 | | | | 64 | | | | | | | | | |
| | Polyfunctional (meth)acrylate 5 | | | | | 64 | | | | | | | | |
| | Polyfunctional (meth)acrylate 6 | 14 | 14 | 14 | 14 | 14 | | 45 | 60 | 14 | 14 | 14 | 14 | 14 |
| | Resin 1 | 22 | 22 | 22 | 22 | 22 | 22 | 22 | 22 | | | | | |
| | Resin 2 | | | | | | | | | 22 | | | | |
| | Resin 3 | | | | | | | | | | 22 | | | |
| | Resin 4 | | | | | | | | | | | 22 | | |
| | Resin 5 | | | | | | | | | | | | 22 | |
| | Resin 6 | | | | | | | | | | | | | 22 |
| | Polymerization inhibitor 1 | 0.2 | 0.2 | 0.2 | 0.2 | 0.2 | 0.2 | 0.2 | 0.2 | 0.2 | 0.2 | 0.2 | 0.2 | 0.2 |
| Evaluation | tan δ | 3.2 | 3.4 | 1.8 | 1.5 | 2.7 | 2.6 | 3.1 | 8.1 | 3.0 | 3.4 | 6.0 | 8.9 | 41 |
| | Viscosity (Pa.s) | 154 | 254 | 291 | 378 | 268 | 231 | 94 | 37 | 334 | 277 | 41 | 47 | 9 |

### [Example 18 (Comparative Example)] <Preparation of waterless lithographic ink>

The varnish 1, the pigment 1, the photopolymerization initiators 1 and 2, the sensitizing agent 1, the additive 1, and the wax 1 were weighed according to the composition shown in Table 4 and passed through roller gap 1 of a three roll mill "EXAKT" (Registered Trademark) M-80S (manufactured by EXAKT) twice at a speed of 500 rpm to obtain the lithographic ink.

The resulting ink was subjected to waterless lithography test to evaluate the performance. The results are shown in Table 4.

The resulting lithographic ink had a viscosity at 0.5 rpm of 58Pa.s. The reflected density in the non-printing part was 0.04, and the resistance to surface staining was excellent. The resulting printed material had an excellent gloss in the solid part of with the gloss value of 38.

### [Examples 19 to 22 (Comparative Examples)] <Types of the polyfunctional (meth)acrylate having hydroxyl group>

The procedure of Example 18 was repeated except that the varnish 1 was changed to the composition of varnishes 2 to 5 in Table 4 to prepare the lithographic inks of Examples 19 to 22. There was tendency that increase in the hydroxyl value and the molecular weight of the polyfunctional (meth)acrylate having hydroxyl group constituting the varnishes 2 to 5 resulted in the increase of the ink viscosity and the loss of resistance to surface staining. In the meanwhile, such increase in the hydroxyl value and the molecular weight also tended to result in the loss of the gloss value in the solid part of the printed material.

### [Examples 23 to 25 (Comparative Examples)] <Content of the polyfunctional (meth)acrylate having hydroxyl group>

The procedure of Example 18 was repeated except that the composition of the varnish 1 was changed to the one shown in varnishes 6 to 8 of Table 4 to prepare the lithographic inks of Examples 23 to 25. There was tendency that the resulting lithographic ink had higher viscosity and improved resistance to the surface staining with the increase in the content of the polyfunctional (meth)acrylate having hydroxyl group constituting the varnish 6 to 8. In the meanwhile, such increase in the content also tended to result in the loss of the gloss value in the solid part of the printed material.

### [Example 26 (Comparative Example), Reference Examples 1 to 3 and Comparative Example 9] <Type of the resin having a hydrophilic group>

The procedure of Example 18 was repeated except that the varnish 1 was changed to the varnishes 9 to 13 according to the composition of Table 4 to prepare the lithographic inks of Example 26, Reference Examples 1 to 3, and Comparative Example 9. The resulting lithographic inks tended to exhibit higher viscosity and improved resistance to surface staining with the increase in the acid value and the molecular weight of the resin constituting the varnish 9 to 13. However, gloss in the solid part of the printed material was inferior. In particular, the viscosity was low and the resistance to surface staining was insufficient in the case of the resin of Comparative Example 9 having no acidic group.

**[Table 4]**

| | | Example (Comparative Example) | | | | | | | | | Reference Example | | | Comparative Example |
|---|---|---|---|---|---|---|---|---|---|---|---|---|---|---|
| | | 18 | 19 | 20 | 21 | 22 | 23 | 24 | 25 | 26 | 1 | 2 | 3 | 9 |
| Composition (Mass %) | Varnish 1 | 60 | | | | | | | | | | | | |
| | Varnish 2 | | 60 | | | | | | | | | | | |
| | Varnish 3 | | | 60 | | | | | | | | | | |
| | Varnish 4 | | | | 60 | | | | | | | | | |
| | Varnish 5 | | | | | 60 | | | | | | | | |
| | Varnish 6 | | | | | | 60 | | | | | | | |
| | Varnish 7 | | | | | | | 60 | | | | | | |
| | Varnish 8 | | | | | | | | 60 | | | | | |
| | Varnish 9 | | | | | | | | | 60 | | | | |
| | Varnish 10 | | | | | | | | | | 60 | | | |
| | Varnish 11 | | | | | | | | | | | 60 | | |
| | Varnish 12 | | | | | | | | | | | | 60 | |
| | Varnish 13 | | | | | | | | | | | | | 60 |
| | Pigment 1 | 18 | 18 | 18 | 18 | 18 | 18 | 18 | 18 | 18 | 18 | 18 | 18 | 18 |
| | Photopolymerization initiator 1 | 6 | 6 | 6 | 6 | 6 | 6 | 6 | 6 | 6 | 6 | 6 | 6 | 6 |
| | Photopolymerization initiator 2 | 4 | 4 | 4 | 4 | 4 | 4 | 4 | 4 | 4 | 4 | 4 | 4 | 4 |
| | Sensitizing agent 1 | 4 | 4 | 4 | 4 | 4 | 4 | 4 | 4 | 4 | 4 | 4 | 4 | 4 |
| | Additive 1 | 6 | 6 | 6 | 6 | 6 | 6 | 6 | 6 | 6 | 6 | 6 | 6 | 6 |
| | Wax 1 | 2 | 2 | 2 | 2 | 2 | 2 | 2 | 2 | 2 | 2 | 2 | 2 | 2 |
| Evaluation | Viscosity @ 0.5 rpm (Pa.s) | 58 | 74 | 93 | 120 | 84 | 80 | 46 | 31 | 99 | 79 | 33 | 37 | 20 |
| | Resistance to surface staining | 0.04 | 0.02 | 0.01 | <0.01 | 0.04 | 0.05 | 0.1 | 0.15 | <0.01 | 0.04 | 0.14 | 0.11 | 0.39 |
| | Gloss | 38 | 34 | 30 | 28 | 31 | 33 | 40 | 42 | 30 | 33 | 42 | 41 | 42 |

### [Example 27 (Comparative Example)] <Preparation of the water lithographic ink>

The procedure of Example 18 was repeated except that the composition was as shown in Table 5 and the emulsifier 1 was added to prepare the lithographic ink of Example 27. The resulting lithographic ink had a viscosity at 0.5 rpm of 66 Pa.s. The resistance to surface staining was excellent with the reflection density in the non-printing area of 0.02. The resulting printed material had an excellent gloss in the solid part of 36.

### [Examples 28 to 29 (Comparative Examples), Reference Example 4, and Comparative Example 10]

### <Preparation of water lithographic inks with different varnish>

The lithographic inks of Examples 28 to 29, Reference Example 4, and Comparative Example 10 were prepared by repeating the procedure of Example 27 except that the composition of the varnish was changed to the one shown in Table 5. The resulting lithographic ink experienced decrease in the resistance to surface staining due to increase in the acid value of the resin constituting the varnish and resulting difficulty of taking in the wetting water (Reference Example 4). In the meanwhile, the resistance to surface staining was improved due to the decrease in the hydroxyl value of the polyfunctional (meth)acrylate having hydroxyl group constituting the varnish and the resulting adequate hydrophobicity of the ink (Examples 28 and 29). The ink of Comparative Example 10 exhibited low viscosity and insufficient resistance to surface staining.

**[Table 5]**

| | | Example (Comparative Example) | | | Reference Example | Comparative Example |
|---|---|---|---|---|---|---|
| | | 27 | 28 | 29 | 4 | 10 |
| Composition (Mass %) | Varnish 1 | 66 | | | | |
| | Varnish 4 | | 66 | | | |
| | Varnish 8 | | | 66 | | |
| | Varnish 10 | | | | 66 | |
| | Varnish 13 | | | | | 66 |
| | Pigment 1 | 18 | 18 | 18 | 18 | 18 |
| | Photopolymerization initiator 1 | 6 | 6 | 6 | 6 | 6 |
| | Photopolymerization initiator 2 | 4 | 4 | 4 | 4 | 4 |
| | Sensitizing agent 1 | 4 | 4 | 4 | 4 | 4 |
| | Emulsifier 1 | 0.2 | 0.2 | 0.2 | 0.2 | 0.2 |
| | Wax 1 | 2 | 2 | 2 | 2 | 2 |
| Evaluation | Viscosity @0.5 rpm (Pa.s) | 66 | 121 | 83 | 40 | 29 |
| | Resistance to surface staining | 0.02 | 0.01 | 0.03 | 0.15 | 0.19 |
| | Gloss | 36 | 30 | 34 | 39 | 39 |

### <Starting materials for the ink>

Pigment A: (azo lake pigment) "Lake Red" (Registered Trademark) C #405(F) (manufactured by Dainichiseika Color & Chemicals Mfg. Co., Ltd.)
Pigment B: (azo lake pigment) "SEIKAFAST" (Registered Trademark) CARMINE 1476T-7 (manufactured by Dainichiseika Color & Chemicals Mfg. Co., Ltd.)
Pigment C: (azo lake pigment) 430 BRILLIANT BORDEAU 10B (manufactured by Dainichiseika Color & Chemicals Mfg. Co., Ltd.)
Pigment D: (azo lake pigment) "LIONOL" (Registered Trademark) RED TT-4801G (manufactured by TOYO INK)
Pigment E: (copper phthalocyanine complex) "CHROMOFINE" (Registered Trademark) β-type BLUE PB-15:3 (manufactured by Dainichiseika Color & Chemicals Mfg. Co., Ltd.)
Pigment F: (copper phthalocyanine complex) "CHROMOFINE" (Registered Trademark) GREEN PG-7 (manufactured by Dainichiseika Color & Chemicals Mfg. Co., Ltd.)
Pigment G: (cobalt phthalocyanine complex) "CHROMOFINE" (Registered Trademark) cobalt phthalocyanine BLUE PB-75 (manufactured by Dainichiseika Color & Chemicals Mfg. Co., Ltd.)
Pigment H: carbon black MA8 (manufactured by Mitsubishi Chemical Corporation); particle diameter, 24 nm; dibutyl phthalate absorption number, 57 cm³/100 g; having an acidic group (carboxyl group)
Pigment I: "carbon black MA77 (manufactured by Mitsubishi Chemical Corporation); particle diameter, 23 nm; dibutyl phthalate absorption number, 68 cm³/100 g; having an acidic group (carboxyl group)
Pigment J: carbon black MA11 (manufactured by Mitsubishi Chemical Corporation); particle diameter, 29 nm; dibutyl phthalate absorption number, 64 cm³/100 g; having an acidic group (carboxyl group)
Pigment K: carbon black MA14 (manufactured by Mitsubishi Chemical Corporation); particle diameter, 40 nm; dibutyl phthalate absorption number, 73 cm³/100 g; having an acidic group (carboxyl group)
Pigment L: carbon black MA100 (manufactured by Mitsubishi Chemical Corporation); particle diameter, 24 nm; dibutyl phthalate absorption number, 100 cm³/100 g; having an acidic group (carboxyl group)
Pigment M: carbon black MA220 (manufactured by Mitsubishi Chemical Corporation); particle diameter, 55 nm; dibutyl phthalate absorption number, 93 cm³/100 g; having an acidic group (carboxyl group)
Pigment N: carbon black #45 (manufactured by Mitsubishi Chemical Corporation); particle diameter, 24 nm; dibutyl phthalate absorption number, 53 cm³/100 g; having no acidic group
Pigment dispersant A: "DISPERBYK" (Registered Trademark)-111; acid value, 129 mgKOH/g; phosphate group-containing anionic surfactant (manufactured by BYK Japan KK)
Pigment dispersant B: "PLYSURF" (Registered Trademark) A212C; acid value, 110 mgKOH/g; phosphate group-containing anionic surfactant (manufactured by DKS Co. Ltd.)
Pigment dispersant C: "DISPARON" (Registered Trademark) 1850; acid value, 73 mgKOH/g; phosphate group-containing anionic surfactant (manufactured by Kusumoto Chemicals, Ltd.)
Pigment dispersant D: "PLYSURF" (Registered Trademark) A208N; acid value, 145 mgKOH/g; phosphate group-containing anionic surfactant (manufactured by DKS Co. Ltd.)
Pigment dispersant E: "PLYSURF" (Registered Trademark) A219B; acid value, 51 mgKOH/g; phosphate group-containing anionic surfactant (manufactured by DKS Co. Ltd.)
Pigment dispersant F: "DISPERBYK" (Registered Trademark)-2015; acid value, 10 mgKOH/g (manufactured by BYK Japan KK)
Pigment dispersant G: "PLYSURF" (Registered Trademark) A208F; acid value, 180 mgKOH/g; phosphate group-containing anionic surfactant (manufactured by DKS Co. Ltd.)
Pigment dispersant I: "DISPARON" (Registered Trademark) DA-325; amine value, 20 mgKOH/g (manufactured by Kusumoto Chemicals, Ltd.)
Pigment dispersant J: "BYK" (Registered Trademark)-9076; amine value, 44 mgKOH/g 1 (manufactured by BYK Japan KK)
Pigment dispersant K: "DISPERBYK" (Registered Trademark)-191; amine value, 20 mgKOH/g (manufactured by BYK Japan KK)
Pigment dispersant L: "DISPERBYK" (Registered Trademark)-2155; amine value, 48 mgKOH/g; acid value, 0 mgKOH/g (manufactured by BYK Japan KK)
Pigment dispersant M: "DISPERBYK" (Registered Trademark)-2022; amine value, 61 mgKOH/g (manufactured by BYK Japan KK)
Pigment dispersant N: "DISPERBYK" (Registered Trademark)-2000; amine value, 4 mgKOH/g (manufactured by BYK Japan KK)

Resin A (containing an ethylenically unsaturated group and a hydrophilic group (acidic group)): 0.6 equivalent weight of glycidyl methacrylate was reacted (addition reaction) with the carboxyl group of a copolymer comprising 25 mass % of methyl methacrylate, 25 mass % of styrene, and 50 mass % of methacrylic acid (by dissolving methyl methacrylate, styrene, methacrylic acid, and azoisobutyronitrile, slowly adding these dissolved reactants dropwise to a solvent maintained at 75°C, allowing the reaction to proceed for 5 hours; and in the meanwhile, dissolving glycidyl methacrylate, tetrabutylammonium chloride, and p-methoxy phenol, and slowly adding dropwise these dissolved reactants to the reaction system, and allowing the reaction to proceed for 3 hours). The resin had a weight average molecular weight of 34,000, an acid value of 102 mgKOH/g, and an iodine number of 2.0 mol/kg.

Resin B (containing an ethylenically unsaturated group and a hydrophilic group (acidic group)): 0.95 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 39,000, an acid value of 10 mgKOH/g, and an iodine number of 3.1 mol/kg.

Resin C (containing an ethylenically unsaturated group and a hydrophilic group (acidic group)): 0.9 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 38,000, an acid value of 35 mgKOH/g, and an iodine number of 2.9 mol/kg.

Resin D (an ethylenically unsaturated group and a hydrophilic group (acidic group)): 0.8 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 37,000, an acid value of 62 mgKOH/g, and an iodine number of 2.5 mol/kg.

Resin E (containing an ethylenically unsaturated group and a hydrophilic group (acidic group)): 0.4 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 32,000, an acid value of 190 mgKOH/g, and an iodine number of 1.0 mol/kg.

Resin F (containing an ethylenically unsaturated group and a hydrophilic group (acidic group)): 0.2 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 31,000, an acid value of 240 mgKOH/g, and an iodine number of 0.5 mol/kg.

Resin G (containing an ethylenically unsaturated group and a hydrophilic group (acidic group)): 0.1 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 30,000, an acid value of 259 mgKOH/g, and an iodine number of 0.25 mol/kg.

Resin H (containing only the hydrophilic group (acidic group)): a copolymer comprising 25 mass % of methyl acrylate, 25 mass % of styrene, and 50 mass % of methacrylic acid having a weight average molecular weight of 29,000, an acid value of 282 mgKOH/g, and an iodine number of 0 mol/kg.

Resin I (containing only the ethylenically unsaturated group): 1.0 equivalent weight of glycidyl methacrylate was reacted (addition reaction) with the carboxyl group of a copolymer comprising 25 mass % of methyl methacrylate, 25 mass % of styrene, and 50 mass % of methacrylic acid. The resin had a weight average molecular weight of 40,000, an acid value of 0 mgKOH/g, and an iodine number of 3.2 mol/kg.

Reactive diluent A (containing an ethylenically unsaturated group and a hydrophilic group): "Miramer" (Registered Trademark) M340 pentaerythritol triacrylate (manufactured by Miwon)
Reactive diluent B (containing only ethylenically unsaturated group): "Miramer" (Registered Trademark) M280 polyethylene glycol diacrylate (manufactured by Miwon)
Reactive diluent C (containing only ethylenically unsaturated group): "Miramer" (Registered Trademark) M300 trimethylolpropanetriacrylate (manufactured by Miwon)
Photopolymerization initiator A: "IRGACURE" (Registered Trademark) 907 (manufactured by BASF)
Sensitizing agent A: diethylaminobenzophenone (manufactured by Tokyo Chemical Industry Co., Ltd.)
Polymerization inhibitor A: hydroquinone monomethyl ether (manufactured by Tokyo Chemical Industry Co., Ltd.)
Additive A: lauryl acrylate (manufactured by Wako Pure Chemical Industries, Ltd.)

### <Measurement of fluidity>

Parallel plates (diameter, 25 mm; gap, 0.1 mm) were mounted on Rheometer-MCR301 manufactured by Anton Paar, and loss elastic modulus (viscosity) and storage elastic modulus (elastic modulus) at 25°C, an angular velocity of 100 rad/s, and a strain of up to 1% were measured to calculate the value of the loss tangent tan δ represented by the ratio of the loss modulus to the storage modulus. The fluidity was recognized at the tan δ value of 1 or higher, and evaluated good at 2.0 or higher and very good at 3.0 or higher.

### <Printing test>

A waterless lithography plate (TAN-E manufactured by Toray Industries, Inc.) was mounted on an offset press (Oliver 266EPZ manufactured by SAKURAI GRAPHIC SYSTEMS CORPORATION), and 10000 coated papers were printed by using inks respectively having the composition shown in Tables 6 to 14 to evaluate the lithography adaptability and the printed material. The methods used for the evaluation were as described above.

### (1) Sensitivity

The printed material was irradiated with UV by using a UV irradiation apparatus manufactured by Ushio (120 W/cm, 1 ultra-high metal halide lamp) under the condition of the belt conveyer speed of 0 to 150 m/min to determine the belt conveyer speed when the ink on the printed material became sufficiently cured such that the ink was no longer peelable when a cellophane adhesive tape ("Sellotape" (Registered Trademark) No.405) was adhered onto the coated paper and then peeled from the coated paper. In this case, higher belt conveyer speed indicates higher sensitivity since the curing can be accomplished with reduced exposure. The sensitivity was evaluated insufficient when the belt conveyer speed was less than 100 m/min; good when the belt conveyer speed was at least 100 m/min and less than 120 m/min; and excellent when the belt conveyer speed was at least 120 m/min since the printed material having such sensitivity can be used in a power-saving UV printer.

### (2) Washability with water

The ink remaining on the roller of the printer after finishing the printing was washed with 1 liter of water flowing over the printer, and the washability of the ink with water was evaluated by 3 grades.
A: the ink was entirely removed by washing once with water
B: the ink was entirely removed by washing twice with water
C: the ink residue remained even after washing three times with water

### (3) Water resistance of the film

The ink cured film on the printed material was retained in water at 25°C, and the water resistance was evaluated by 3 grades. Elution of the ink into the water was visually confirmed.
A: no ink elution was observed before 24 hours
B: no ink elution was observed before 12 hours, but the ink was partly eluted within 24 hours.
C: ink elution was observed before 12 hours.

### (4) Gloss

The ink cured film on the printed material was measured for its gross value by using a precision gloss meter GM-26D (manufactured by MURAKAMI COLOR RESEARCH LABORATORY) at a measurement angle of 60°. The gloss was evaluated poor when the gloss value was less than 30, and good when the gloss value was at least 30, and excellent when the gloss value was at least 35.

### (5) Resistance to surface staining

Magenta density in the non-printing part of the printed material was evaluated for the case when the magenta density in the solid part of the printed material was 2.0 by using a reflection densitometer (SpectroEye manufactured by GretagMacbeth). The resistance to surface staining was inferior when the reflected density was in excess of 0.5, slightly inferior when the reflected density was in excess of 0.3, good when the reflected density was up to 0.3, and excellent when the reflected density was up to 0.1.

### [Example 30]

Components of the ink composition shown in Table 6 were weighed and passed through gap (10 µm) of a three roll mill "EXAKT" (Registered Trademark) M-80S (manufactured by EXAKT) three times to obtain the lithographic ink.

The resulting lithographic ink was evaluated by the fluidity test and the printing test as described above to evaluate the ink fluidity, the sensitivity, the washability with water, the gloss, and the resistance to the surface staining. The results are shown in Table 6.

The lithographic ink prepared had an excellent fluidity with the value of the loss tangent tan δ of 3.67. The sensitivity was excellent with the belt conveyer speed of 130 m/min. With regard to the washability with water, all remaining ink on the roller could be washed by one washing with water, and with regard to the water resistance, no ink elution was recognized before 24 hours. The gloss was excellent with the value of 40. The resistance to surface staining was excellent with the reflection density in the non-printing area of 0.05.

### [Examples 31 to 36] <Type of the pigment>

The procedure of Example 30 was repeated except that the type of the pigment was as shown in Table 6 to conduct the fluidity test and evaluation of the sensitivity, the washability with water, the water resistance, the gloss, and the resistance to surface staining. The lithographic inks of all of Examples 31 to 36 exhibited excellent results in the fluidity test and evaluation of the sensitivity, the washability with water, the water resistance, the gloss, and the resistance to surface staining.

### [Examples 37 to 40] <Type of the pigment dispersant>

The procedure of Example 30 was repeated except that the type of the pigment dispersant was changed as shown in Table 7 to conduct the fluidity test and evaluation of the sensitivity, the washability with water, the water resistance, the gloss, and the resistance to surface staining. The lithographic inks of all of Examples 37 to 42 exhibited good results in the fluidity test and evaluation of the sensitivity, the washability with water, the water resistance, the gloss, and the resistance to surface staining. However, the ink fluidity and the gloss were particularly excellent in Examples 37 and 39 wherein the acid value of the pigment dispersant was respectively 110 mgKOH/g and 145 mgKOH/g.

### [Examples 43 to 45; Examples 46 and 47(Comparative Example)] <Content of the pigment dispersant>

The procedure of Example 30 was repeated except that the content of the pigment dispersant was changed as shown in Table 8 to conduct the fluidity test and evaluation of the sensitivity, the washability with water, the water resistance, the gloss, and the resistance to surface staining. For all lithographic inks of Examples 43 to 47, the results for the fluidity test, the sensitivity, the washability with water, the water resistance, and the resistance to the surface staining were generally favorable. However, for Example 45 wherein content of the pigment dispersant in relation to the pigment was 30%, the results of fluidity test and gloss evaluation were excellent, and for Examples 46 and 471 wherein content of the pigment dispersant in relation to the pigment was respectively 3% and 60%, the ink fluidity was relatively low and the ink exhibited good gloss.

### [Examples 48 to 53] <Type of the resin>

The procedure of Example 30 was repeated except that the type of the resin was as shown in Table 9 to conduct the fluidity test and evaluation of the sensitivity, the washability with water, the water resistance, the gloss, and the resistance to surface staining. In Example 48 wherein the resin had an acid value of 10 mgKOH/g, the ink fluidity was relatively low and the ink exhibited good gloss while the low acid value of the resin resulted in the washability with water of "B" and slightly poor resistance to surface staining. In Example 53 wherein the resin had an iodine number of 0.25 mol/kg, the ink exhibited low curability despite its good sensitivity, and the water resistance was "B". The lithographic ink of Examples 49 to 52 exhibited excellent results in the fluidity test and evaluation of the sensitivity, the washability with water, the water resistance, the gloss, and the resistance to surface staining.

### [Example 55 (Comparative Example)]

The procedure of Example 30 was repeated except that the content of the pigment dispersant was changed as shown in Table 10 to conduct the fluidity test and evaluation of the sensitivity, the washability with water, the water resistance, the gloss, and the resistance to surface staining. The resulting ink had a reduced fluidity with the loss tangent tan δ in the fluidity measurement of 0.88. While the sensitivity, the washability with water, the water resistance, and the resistance to the surface staining were excellent, the gloss was insufficient with the greatly reduced gloss value of 21.

### [Comparative Example 11]

The procedure of Example 30 was repeated except that the type of the reactive diluent and the content of the pigment dispersant were changed as shown in Table 10 to conduct the fluidity test and evaluation of the sensitivity, the washability with water, the water resistance, the gloss, and the resistance to surface staining. While the resulting ink exhibited good washability with water and good resistance to surface staining, the fluidity was poor with the loss tangent tan δ in the fluidity measurement of 0.84. Also, the ink had insufficient sensitivity with the belt conveyer speed of 75 m/min. In addition, the water resistance was "C" with the ink elution at 6 hours in the measurement of the water resistance. The gloss was also insufficient with the greatly reduced gloss value of 19.

### [Comparative Example 12]

The procedure of Example 30 was repeated except that the type of the resin and the reactive diluent were as shown in Table 10 to conduct the fluidity test and evaluation of the sensitivity, the washability with water, the water resistance, the gloss, and the resistance to surface staining. The resulting ink had a reduced fluidity with the loss tangent tan δ in the fluidity measurement of 1.24. While the sensitivity was good, the washability with water was "C" with the residue remaining even after washing three times with water. The gloss was poor with the gloss value of 27. The resistance to surface staining was poor with the reflected density in the non-printing part of 0.75.

**[Table 6]**

| | | Example 30 | Example 31 | Example 32 | Example 33 | Example 34 | Example 35 | Example 36 |
|---|---|---|---|---|---|---|---|---|
| Pigment | Type | Pigment A | Pigment B | Pigment C | Pigment D | Pigment E | Pigment F | Pigment G |
| | Mass % | 15 | 15 | 15 | 15 | 15 | 15 | 15 |
| Pigment dispersant | Type | Pigment dispersant A | Pigment dispersant A | Pigment dispersant A | Pigment dispersant A | Pigment dispersant A | Pigment dispersant A | Pigment dispersant A |
| | Mass % | 3 | 3 | 3 | 3 | 3 | 3 | 3 |
| Resin | Type | Resin A | Resin A | Resin A | Resin A | Resin A | Resin A | Resin A |
| | Mass % | 12 | 12 | 12 | 12 | 12 | 12 | 12 |
| Reactive diluent | Type | Reactive diluent A | Reactive diluent A | Reactive diluent A | Reactive diluent A | Reactive diluent A | Reactive diluent A | Reactive diluent A |
| | Mass % | 60 | 60 | 60 | 60 | 60 | 60 | 60 |
| Photopolymerization initiator A | Mass % | 3 | 3 | 3 | 3 | 3 | 3 | 3 |
| Sensitizing agent A | Mass % | 3 | 3 | 3 | 3 | 3 | 3 | 3 |
| Polymerization inhibitor A | Mass % | 0.1 | 0.1 | 0.1 | 0.1 | 0.1 | 0.1 | 0.1 |
| Additive A | Mass % | 3.9 | 3.9 | 3.9 | 3.9 | 3.9 | 3.9 | 3.9 |
| Ink fluidity | Loss tangent | 3.67 | 3.32 | 3.75 | 3.49 | 3.55 | 3.07 | 3.12 |
| Sensitivity (m/min) | | 130 | 125 | 135 | 130 | 130 | 135 | 130 |
| Washability with water | | A | A | A | A | A | A | A |
| Water resistance | | A | A | A | A | A | A | A |
| Gloss | Gloss value | 40 | 40 | 41 | 40 | 40 | 41 | 40 |
| Resistance to surface staining | | 0.05 | 0.1 | 0.08 | 0.09 | 0.07 | 0.08 | 0.1 |

**[Table 7]**

| | | Example 37 | Example 38 | Example 39 | Example 40 |
|---|---|---|---|---|---|
| Pigment | Type | Pigment A | Pigment A | Pigment A | Pigment A |
| | Mass % | 15 | 15 | 15 | 15 |
| Pigment dispersant | Type | Pigment dispersant B | Pigment dispersant C | Pigment dispersant D | Pigment dispersant E |
| | Mass % | 3 | 3 | 3 | 3 |
| Resin | Type | Resin A | Resin A | Resin A | Resin A |
| | Mass % | 12 | 12 | 12 | 12 |
| Reactive diluent | Type | Reactive diluent A | Reactive diluent A | Reactive diluent A | Reactive diluent A |
| | Mass % | 60 | 60 | 60 | 60 |
| Photopolymerization initiator A | Mass % | 3 | 3 | 3 | 3 |
| Sensitizing agent A | Mass % | 3 | 3 | 3 | 3 |
| Polymerization inhibitor A | Mass % | 0.1 | 0.1 | 0.1 | 0.1 |
| Additive A | Mass % | 3.9 | 3.9 | 3.9 | 3.9 |
| Ink fluidity | Loss tangent | 3.51 | 2.45 | 3.34 | 2.21 |
| Sensitivity (m/min) | | 125 | 130 | 135 | 135 |
| Washability with water | | A | A | A | A |
| Water resistance | | A | A | A | A |
| Gloss | Gloss value | 41 | 36 | 40 | 35 |
| Resistance to surface staining | | 0.04 | 0.07 | 0.06 | 0.09 |

**[Table 8]**

| | | Example 43 | Example 44 | Example 45 | Example 46 (Comparative Example) | Example 47 (Comparative Example) |
|---|---|---|---|---|---|---|
| Pigment | Type | Pigment A | Pigment A | Pigment A | Pigment A | Pigment A |
| | Mass % | 15 | 15 | 15 | 15 | 15 |
| Pigment dispersant | Type | Pigment dispersant A | Pigment dispersant A | Pigment dispersant A | Pigment dispersant A | Pigment dispersant A |
| | Mass % | 0.75 | 7.50 | 4.50 | 0.45 | 9.00 |
| Resin | Type | Resin A | Resin A | Resin A | Resin A | Resin A |
| | Mass % | 3 | 3 | 3 | 3 | 3 |
| Reactive diluent | Type | Reactive diluent A | Reactive diluent A | Reactive diluent A | Reactive diluent A | Reactive diluent A |
| | Mass % | 12 | 12 | 12 | 12 | 12 |
| Photopolymerization initiator A | Mass % | 3 | 3 | 3 | 3 | 3 |
| Sensitizing agent A | Mass % | 3 | 3 | 3 | 3 | 3 |
| Polymerization inhibitor A | Mass % | 0.1 | 0.1 | 0.1 | 0.1 | 0.1 |
| Additive A | Mass % | 3.9 | 3.9 | 3.9 | 3.9 | 3.9 |
| Ink fluidity | Loss tangent | 2.34 | 2.11 | 3.45 | 1.81 | 1.75 |
| Sensitivity (m/min) | | 135 | 120 | 125 | 135 | 120 |
| Washability with water | | A | A | A | A | A |
| Water resistance | | A | A | A | A | A |
| Gloss | Gloss value | 36 | 35 | 40 | 33 | 32 |
| Resistance to surface staining | | 0.07 | 0.15 | 0.1 | 0.08 | 0.18 |

**[Table 9]**

| | | Example 48 | Example 49 | Example 50 | Example 51 | Example 52 | Example 53 |
|---|---|---|---|---|---|---|---|
| Pigment | Type | Pigment A | Pigment A | Pigment A | Pigment A | Pigment A | Pigment A |
| | Mass % | 15 | 15 | 15 | 15 | 15 | 15 |
| Pigment dispersant | Type | Pigment dispersant A | Pigment dispersant A | Pigment dispersant A | Pigment dispersant A | Pigment dispersant A | Pigment dispersant A |
| | Mass % | 3 | 3 | 3 | 3 | 3 | 3 |
| Resin | Type | Resin B | Resin C | Resin D | Resin E | Resin F | Resin G |
| | Mass % | 12 | 12 | 12 | 12 | 12 | 12 |
| Reactive diluent | Type | Reactive diluent A | Reactive diluent A | Reactive diluent A | Reactive diluent A | Reactive diluent A | Reactive diluent A |
| | Mass % | 60 | 60 | 60 | 60 | 60 | 60 |
| Photopolymerization initiator A | Mass % | 3 | 3 | 3 | 3 | 3 | 3 |
| Sensitizing agent A | Mass % | 3 | 3 | 3 | 3 | 3 | 3 |
| Polymerization inhibitor A | Mass % | 0.1 | 0.1 | 0.1 | 0.1 | 0.1 | 0.1 |
| Additive A | Mass % | 3.9 | 3.9 | 3.9 | 3.9 | 3.9 | 3.9 |
| Ink fluidity | Loss tangent | 2.75 | 3.02 | 3.32 | 3.87 | 3.95 | 3.98 |
| Sensitivity (m/min) | | 145 | 140 | 135 | 125 | 120 | 115 |
| Washability with water | | B | A | A | A | A | A |
| Water resistance | | A | A | A | A | A | B |
| Gloss | Gloss value | 33 | 35 | 38 | 40 | 42 | 43 |
| Resistance to surface staining | | 0.36 | 0.19 | 0.1 | 0.09 | 0.08 | 0.07 |

**[Table 10]**

| | | Example 55 (Comparative Example) | Comparative Example 11 | Comparative Example 12 |
|---|---|---|---|---|
| Pigment | Type | Pigment A | Pigment A | Pigment A |
| | Mass % | 15 | 15 | 15 |
| Pigment dispersant | Type | Pigment dispersant A | Pigment dispersant A | Pigment dispersant A |
| | Mass % | 0 | 0 | 3 |
| Resin | Type | Resin A | Resin H | Resin I |
| | Mass % | 12 | 12 | 12 |
| Reactive diluent | Type | Reactive diluent A | Reactive diluent B | Reactive diluent C |
| | Mass % | 60 | 60 | 60 |
| Photopolymerization initiator A | Type | 3 | 3 | 3 |
| Sensitizing agent A | Mass % | 3 | 3 | 3 |
| Polymerization inhibitor A | Type | 0.1 | 0.1 | 0.1 |
| Additive A | Mass % | 3.9 | 3.9 | 3.9 |
| Ink fluidity | Loss tangent | 0.88 | 0.84 | 1.24 |
| Sensitivity (m/min) | | 135 | 75 | 130 |
| Washability with water | | A | A | C |
| Water resistance | | A | C | A |
| Gloss | Gloss value | 21 | 19 | 27 |
| Resistance to surface staining | | 0.09 | 0.08 | 0.75 |

### [Example 56 (Comparative Example)]

Components of the ink composition shown in Table 11 were weighed and passed through gap (10 µm) of a three roll mill "EXAKT" (Registered Trademark) M-80S (manufactured by EXAKT) three times to obtain the lithographic ink.

The resulting lithographic ink was evaluated by the fluidity test and the printing test as described above to evaluate the ink fluidity, the sensitivity, the washability with water, the water resistance, the gloss, and the resistance to the surface staining. The results are shown in Table 11.

The lithographic ink prepared had an excellent fluidity with the value of the loss tangent tan δ of 3.27. The sensitivity was excellent with the belt conveyer speed of 130 m/min. With regard to the washability with water, all remaining ink on the roller could be washed by one washing with water, and with regard to the water resistance, no ink elution was recognized before 24 hours. The gloss was excellent with the gloss value of 42. The resistance to surface staining was excellent with the reflection density in the non-printing area of 0.05.

### [Examples 57 to 61 (Comparative Examples)] <Type of the pigment>

The procedure of Example 56 was repeated except that the type of the pigment was as shown in Table 11 to conduct the fluidity test and evaluation of the sensitivity, the washability with water, the water resistance, the gloss, and the resistance to surface staining. In the Examples 60 and 61 wherein the dibutyl phthalate absorption number of the carbon black was respectively 100 and 93, the gloss was good due to the relative increase in the surface roughness of the printed material. The lithographic ink of all of Examples 57 to 59 exhibited excellent results in the fluidity test and evaluation of the sensitivity, the washability with water, the water resistance, the gloss, and the resistance to surface staining.

### [Examples 62 to 67 (Comparative Examples)] <Type of the resin >

The procedure of Example 56 was repeated except that the type of the resin was as shown in Table 12 to conduct the fluidity test and evaluation of the sensitivity, the washability with water, the water resistance, the gloss, and the resistance to surface staining. For Example 62 wherein the resin B had an acid value of 10 mgKOH/g, the ink fluidity was relatively low and the ink had a good gloss. In addition, due to the low acid value of the resin, the washability with water was "B" and the resistance to surface staining was slightly poor. For Example 67 wherein the resin G had an iodine number of 0.25 mol/kg, the ink showed poor curability despite good sensitivity, and the water resistance was "B". Examples 63 to 66 generally exhibited excellent results for the fluidity test, the sensitivity, the washability with water, the water resistance, the gloss, and the resistance to surface staining.

### [Examples 68 to 72 (Comparative Examples)] <Type of the pigment dispersant>

The procedure of Example 56 was repeated except that the type of the pigment dispersant was as shown in Table 13 to conduct the fluidity test and evaluation of the sensitivity, the washability with water, the water resistance, the gloss, and the resistance to surface staining. For Examples 71 and 72 wherein the amine value of the pigment dispersant was respectively 61 mgKOH/g and 4 mgKOH/g, ink fluidity was relatively low and the ink exhibited good gloss. For the lithographic inks of Examples 68 to 70, good results were generally obtained for the fluidity test, the sensitivity, the washability with water, the water resistance, the gloss, and the resistance to surface staining.

### [Comparative Example 13]

The procedure of Example 56 was repeated except that the type of the resin was as shown in Table 14 to conduct the fluidity test and evaluation of the sensitivity, the washability with water, the water resistance, the gloss, and the resistance to surface staining. While the resulting ink exhibited good fluidity test results as well as high washability with water and good resistance to surface staining, the ink had insufficient sensitivity with the belt conveyer speed of 75 m/min. In addition, the water resistance was "C" with the ink elution at 6 hours in the measurement of the water resistance.

### [Comparative Example 14]

The procedure of Example 56 was repeated except that the type of the resin was as shown in Table 14 to conduct the fluidity test and evaluation of the sensitivity, the washability with water, the water resistance, the gloss, and the resistance to surface staining. The resulting ink had a reduced fluidity with the loss tangent tan δ in the fluidity measurement of 1.24. Although the sensitivity and the water resistance were good, the washability with water was "C" with the ink residue remaining even after washing three times with water. The gloss was poor with the gloss value of 27. The resistance to surface staining was poor with the reflected density in the non-printing part of 0.75.

**[Table 11]**

| | | Example 56 (Comparative Example) | Example 57 (Comparative Example) | Example 58 (Comparative Example) | Example 59 (Comparative Example) | Example 60 (Comparative Example) | Example 61 (Comparative Example) |
|---|---|---|---|---|---|---|---|
| Pigment | Type | Pigment H | Pigment I | Pigment J | Pigment K | Pigment L | Pigment M |
| | Mass % | 15 | 15 | 15 | 15 | 15 | 15 |
| Resin | Type | Resin A | Resin A | Resin A | Resin A | Resin A | Resin A |
| | Mass % | 12 | 12 | 12 | 12 | 12 | 12 |
| Pigment dispersant | Type | Pigment dispersant I | Pigment dispersant I | Pigment dispersant I | Pigment dispersant I | Pigment dispersant I | Pigment dispersant I |
| | Mass % | 3 | 3 | 3 | 3 | 3 | 3 |
| Reactive diluent | Type | Reactive diluent A | Reactive diluent A | Reactive diluent A | Reactive diluent A | Reactive diluent A | Reactive diluent A |
| | Mass % | 60 | 60 | 60 | 60 | 60 | 60 |
| Photopolymerization initiator A | Mass % | 3 | 3 | 3 | 3 | 3 | 3 |
| Sensitizing agent A | Mass % | 3 | 3 | 3 | 3 | 3 | 3 |
| Polymerization inhibitor A | Mass % | 0.1 | 0.1 | 0.1 | 0.1 | 0.1 | 0.1 |
| Additive A | Mass % | 3.9 | 3.9 | 3.9 | 3.9 | 3.9 | 3.9 |
| Ink fluidity | Loss tangent | 3.27 | 3.75 | 3.51 | 3.99 | 3.84 | 4.15 |
| Sensitivity (m/min) | | 130 | 130 | 135 | 130 | 130 | 135 |
| Washability with water | | A | A | A | A | A | A |
| Water resistance | | A | A | A | A | A | A |
| Gloss | Gloss value | 42 | 37 | 38 | 35 | 30 | 31 |
| Resistance to surface staining | | 0.05 | 0.1 | 0.08 | 0.09 | 0.07 | 0.08 |

**[Table 12]**

| | | Example 62 (Comparative Example) | Example 63 (Comparative Example) | Example 64 (Comparative Example) | Example 65 (Comparative Example) | Example 66 (Comparative Example) | Example 67 (Comparative Example) |
|---|---|---|---|---|---|---|---|
| Pigment | Type | Pigment H | Pigment H | Pigment H | Pigment H | Pigment H | Pigment H |
| | Mass % | 15 | 15 | 15 | 15 | 15 | 15 |
| Resin | Type | Resin B | Resin C | Resin D | Resin E | Resin F | Resin G |
| | Mass % | 12 | 12 | 12 | 12 | 12 | 12 |
| Pigment dispersant | Type | Pigment dispersant I | Pigment dispersant I | Pigment dispersant I | Pigment dispersant I | Pigment dispersant I | Pigment dispersant I |
| | Mass % | 3 | 3 | 3 | 3 | 3 | 3 |
| Reactive diluent | Type | Reactive diluent A | Reactive diluent A | Reactive diluent A | Reactive diluent A | Reactive diluent A | Reactive diluent A |
| | Mass % | 60 | 60 | 60 | 60 | 60 | 60 |
| Photopolymerization initiator A | Mass % | 3 | 3 | 3 | 3 | 3 | 3 |
| Sensitizer A | Mass % | 3 | 3 | 3 | 3 | 3 | 3 |
| Polymerization inhibitor A | Mass % | 0.1 | 0.1 | 0.1 | 0.1 | 0.1 | 0.1 |
| Additive A | Mass % | 3.9 | 3.9 | 3.9 | 3.9 | 3.9 | 3.9 |
| Ink fluidity | Loss tangent | 2.7 | 3.12 | 3.41 | 3.33 | 3.44 | 3.47 |
| Sensitivity (m/min) | | 145 | 140 | 135 | 125 | 120 | 115 |
| Washability with water | | B | A | A | A | A | A |
| Water resistance | | A | A | A | A | A | B |
| Gloss | Gloss value | 33 | 35 | 38 | 40 | 42 | 43 |
| Resistance to surface staining | | 0.32 | 0.18 | 0.1 | 0.09 | 0.08 | 0.07 |

**[Table 13]**

| | | Example 68 (Comparative Example) | Example 69 (Comparative Example) | Example 70 (Comparative Example) | Example 71 (Comparative Example) | Example 72 (Comparative Example) |
|---|---|---|---|---|---|---|
| Pigment | Type | Pigment H | Pigment H | Pigment H | Pigment H | Pigment H |
| | Mass % | 15 | 15 | 15 | 15 | 15 |
| Resin | Type | Resin A | Resin A | Resin A | Resin A | Resin A |
| | Mass % | 12 | 12 | 12 | 12 | 12 |
| Pigment dispersant | Type | Pigment dispersant J | Pigment dispersant K | Pigment dispersant L | Pigment dispersant M | Pigment dispersant N |
| | Mass % | 3 | 3 | 3 | 3 | 3 |
| Reactive diluent | Type | Reactive diluent A | Reactive diluent A | Reactive diluent A | Reactive diluent A | Reactive diluent A |
| | Mass % | 60 | 60 | 60 | 60 | 60 |
| Photopolymerization initiator A | Mass % | 3 | 3 | 3 | 3 | 3 |
| Sensitizing agent A | Mass % | 3 | 3 | 3 | 3 | 3 |
| Polymerization inhibitor A | Mass % | 0.1 | 0.1 | 0.1 | 0.1 | 0.1 |
| Additive A | Parts by weight | 3.9 | 3.9 | 3.9 | 3.9 | 3.9 |
| Ink fluidity | Loss tangent | 3.19 | 3.34 | 3.08 | 2.51 | 2.78 |
| Sensitivity (m/min) | | 135 | 130 | 135 | 135 | 135 |
| Washability with water | | A | A | A | A | A |
| Water resistance | | A | A | A | A | A |
| Gloss | Gloss value | 41 | 36 | 40 | 33 | 34 |
| Resistance to surface staining | | 0.04 | 0.07 | 0.06 | 0.09 | 0.14 |

**[Table 14]**

| | | Comparative Example 13 | Comparative Example 14 |
|---|---|---|---|
| Pigment | Type | Pigment H | Pigment H |
| | Mass % | 15 | 15 |
| Resin | Type | Resin H | Resin I |
| | Mass % | 12 | 12 |
| Pigment dispersant | Type | Pigment dispersant I | Pigment dispersant I |
| | Mass % | 3 | 3 |
| Reactive diluent | Type | Reactive diluent A | Reactive diluent A |
| | Mass % | 60 | 60 |
| Photopolymerization initiator A | Mass % | 3 | 3 |
| Sensitizing agent A | Mass % | 3 | 3 |
| Polymerization inhibitor A | Mass % | 0.1 | 0.1 |
| Additive A | Mass % | 3.9 | 3.9 |
| Ink fluidity | Loss tangent | 3.45 | 1.24 |
| Sensitivity | | 75 | 130 |
| Washability with water | | A | C |
| Water resistance | | C | A |
| Gloss | Gloss value | 42 | 27 |
| Resistance to surface staining | | 0.08 | 0.75 |

### [Example 74]

The lithography adaptability test and the curing test as described below were conducted by using a lithographic ink shown in Table 1 with the same composition as that of the Example 1 to evaluate the sensitivity, the water resistance of the film, and the warping of the substrate.

### <Lithography adaptability test>

A waterless lithography plate (TAN-E manufactured by Toray Industries, Inc.) was mounted on an offset press (Oliver 266EPZ manufactured by SAKURAI GRAPHIC SYSTEMS CORPORATION), and 10000 coated papers were printed by using inks respectively having the composition shown in Example 1 to evaluate the lithography adaptability and the printed material.

### <Curing test>

The printed material was irradiated with UV by using a UV irradiation apparatus manufactured by Ushio (120 W/cm, 1 ultra-high metal halide lamp) under the condition of the belt conveyer speed of 0 to 150 m/min to determine the belt conveyer speed when the ink on the printed material becomes sufficiently cured such that the ink is no longer peelable when a cellophane adhesive tape ("Sellotape" (Registered Trademark) No.405) is adhered onto the polyethylene terephthalate film and then peeled from the polyethylene terephthalate film. In this case, higher belt conveyer speed indicates higher sensitivity since the curing can be accomplished with reduced exposure. The sensitivity was evaluated insufficient when the belt conveyer speed was less than 100 m/min, good when the belt conveyer speed was at least 100 m/min and less than 120 m/min, and excellent when the belt conveyer speed was at least 120 m/min.

The sensitivity was excellent with the belt conveyer speed of 130 m/min. With regard to the water resistance of the film, ink elution from the cured ink film in water at 25°C was not recognized even after 24 hours. However, warping by thermal expansion and contraction was visually recognizable for the terephthalate film after the UV irradiation.

### [Example 75]

The procedure of Example 74 was repeated except that the UV irradiation apparatus manufactured by Ushio (120 W/cm, 1 ultra-high metal halide lamp) was replaced with an UV irradiation apparatus (5 W/cm², LED-UV) manufactured by Panasonic Industrial Devices SUNX Co., Ltd. to conduct the lithography adaptability test and the curing test to thereby evaluate the sensitivity, the water resistance of the film, and the warping of the substrate.

The sensitivity was excellent with the belt conveyer speed of 120 m/min. With regard to the water resistance of the film, ink elution from the cured ink film in water at 25°C was not recognized even after 24 hours. In addition, warping by thermal expansion and contraction was not recognizable for the polyethylene terephthalate film after the LED-UV irradiation.

### [Example 76]

The procedure of Example 74 was repeated except that the polyethylene terephthalate film was replaced with an aluminum-deposited paper and the UV irradiation apparatus manufactured by Ushio (120 W/cm, 1 ultra-high metal halide lamp) was replaced with an electron beam irradiation apparatus "Min-EB" (100eV) manufactured by Ushio to conduct the lithography adaptability test and the curing test to thereby evaluate the sensitivity, the water resistance of the film, and the warping of the substrate.

The sensitivity was excellent with the belt conveyer speed of 130 m/min. With regard to the water resistance of the film, ink elution from the cured ink film in water at 25°C was not recognized even after 24 hours. In addition, warping by thermal expansion and contraction was not recognizable in the aluminum-deposited paper after irradiation with the electron beam.

## Claims

1. A lithographic ink comprising (a) a pigment and (b) a resin having an ethylenically unsaturated group and a hydrophilic group, further comprising (g) a pigment dispersant, wherein content of the pigment dispersant (g) is 5 to 50 mass % in relation to 100 mass % of the pigment (a), and wherein the pigment dispersant (g) contains an acidic group.

2. A lithographic ink according to claim 1 wherein the hydrophilic group of the resin (b) having an ethylenically unsaturated group and a hydrophilic group includes at least one functional group selected from carboxyl group, sulfo group, phosphate group, hydroxy group, and amino group.

3. A lithographic ink according to claim 1 wherein the pigment dispersant (g) has an acid value of 5 to 200 mgKOH/g.

4. A lithographic ink according to claim 1 or 3 wherein the pigment dispersant (g) also has a basic group.

5. A lithographic ink according to any one of claims 1 to 4 wherein the pigment dispersant (g) has amino group.

6. A lithographic ink according to claim 4 or 5 wherein the pigment dispersant (g) has an amine value of 5 to 50 mgKOH/g.

7. A lithographic ink according to any one of claims 1 to 6 wherein the pigment (a) is selected from a water-insoluble salt, an azo lake pigment, a metal complex, and carbon black.

8. A lithographic ink according to claim 7 wherein the carbon black has an acidic group.

9. A lithographic ink according to claim 7 or 8 wherein the carbon black has an average particle diameter of 10 to 50 nm.

10. A method for producing a printed material using the lithographic ink according to any one of claims 1 to 9.

11. A method for producing a printed material comprising the step of printing the lithographic ink according to any one of claims 1 to 9 on a substrate by using a waterless lithography plate.

12. A method for producing a printed material according to claim 11 further comprising the step of conducing irradiation with an active energy beam.

13. A method for producing a printed material according to claim 11 or 12 wherein the substrate comprises at least one member selected from plastic film, plastic film laminate paper, metal, metal-vapor-deposited paper, and metal-vapor-deposited plastic film.

## Patentansprüche

1. Lithographische Tinte, die (a) ein Pigment und (b) ein Harz mit einer ethylenisch ungesättigten Gruppe und einer hydrophilen Gruppe und weiterhin (g) ein Pigmentdispergiermittel umfasst, wobei der Anteil des Pigmentdispergiermittels (g) 5 bis 50 Massen-% in Bezug auf 100 Massen-% des Pigments (a) beträgt und wobei das Pigmentdispergiermittel (g) eine saure Gruppe enthält.

2. Lithographische Tinte nach Anspruch 1, wobei die hydrophile Gruppe des Harzes (b) eine ethylenisch ungesättigte Gruppe aufweist und eine hydrophile Gruppe wenigstens eine funktionale Gruppe enthält, die aus einer Carboxylgruppe, einer Sulfogruppe, einer Phosphatgruppe, einer Hydroxygruppe und einer Aminogruppe ausgewählt ist.

3. Lithographische Tinte nach Anspruch 1, wobei das Pigmentdispergiermittel (g) einen sauren Wert von 5 bis 200 mgKOH/g aufweist.

4. Lithographische Tinte nach Anspruch 1 oder 3, wobei das Pigmentdispergiermittel (g) auch eine basische Gruppe aufweist.

5. Lithographische Tinte nach einem der Ansprüche 1 bis 4, wobei das Pigmentdispergiermittel (g) eine Aminogruppe aufweist.

6. Lithographische Tinte nach Anspruch 4 oder 5, wobei das Pigmentdispergiermittel (g) eine Aminzahl von 5 bis 50 mgKOH/g aufweist.

7. Lithographische Tinte nach einem der Ansprüche 1 bis 6, wobei das Pigment (a) aus einem wasserunlöslichen Salz, einem Azolackpigment, einem Metallkomplex und Industrieruß ausgewählt ist.

8. Lithographische Tinte nach Anspruch 7, wobei der Industrieruß eine saure Gruppe aufweist.

9. Lithographische Tinte nach Anspruch 7 oder 8, wobei der Industrieruß einen durchschnittlichen Partikeldurchmesser von 10 bis 50 nm aufweist.

10. Verfahren zum Erzeugen eines Druckmaterials unter Verwendung der lithographischen Tinte gemäß einem der Ansprüche 1 bis 9.

11. Verfahren zum Erzeugen eines Druckmaterials, das einen Schritt zum Drucken der lithographischen Tinte gemäß einem der Ansprüche 1 bis 9 auf ein Substrat unter Verwendung einer wasserlosen lithographischen Platte umfasst.

12. Verfahren zum Erzeugen eines Druckmaterials nach Anspruch 11, das weiterhin einen Schritt zum Durchführen einer Bestrahlung mit einem aktiven Energiestrahl umfasst.

13. Verfahren zum Erzeugen eines Druckmaterials nach Anspruch 11 oder 12, wobei das Substrat wenigstens ein Glied umfasst, das aus einer Kunststofffolie, einem mit einer Kunststofffolie laminierten Papier, einem Metall, einem Papier mit einem aufgedampften Metall und einer Folie mit einem aufgedampften Metall ausgewählt ist.

## Revendications

1. Encre lithographique comprenant (a) un pigment et (b) une résine ayant un groupe éthyléniquement insaturé et un groupe hydrophile, comprenant en outre (g) un dispersant de pigment, dans laquelle la teneur en le dispersant de pigment (g) est de 5 à 50 % en masse par rapport à 100 % en masse du pigment (a), et dans laquelle le dispersant de pigment (g) contient un groupe acide.

2. Encre lithographique selon la revendication 1, dans laquelle le groupe hydrophile de la résine (b) ayant un groupe éthyléniquement insaturé et un groupe hydrophile comprend au moins un groupe fonctionnel choisi parmi un groupe carboxyle, un groupe sulfo, un groupe phosphate, un groupe hydroxy et un groupe amino.

3. Encre lithographique selon la revendication 1, dans laquelle le dispersant de pigment (g) a un indice d'acidité de 5 à 200 mg de KOH/g.

4. Encre lithographique selon la revendication 1 ou 3, dans laquelle le dispersant de pigment (g) possède également un groupe basique.

5. Encre lithographique selon l'une quelconque des revendications 1 à 4, dans laquelle le dispersant de pigment (g) possède un groupe amino.

6. Encre lithographique selon la revendication 4 ou 5, dans laquelle le dispersant de pigment (g) a un indice d'amine de 5 à 50 mg de KOH/g.

7. Encre lithographique selon l'une quelconque des revendications 1 à 6, dans laquelle le pigment (a) est choisi parmi un sel insoluble dans l'eau, un pigment-laque azoïque, un complexe métallique et le noir de carbone.

8. Encre lithographique selon la revendication 7, dans laquelle le noir de carbone possède un groupe acide.

9. Encre lithographique selon la revendication 7 ou 8, dans laquelle le noir de carbone a un diamètre moyen de particule de 10 à 50 nm.

10. Procédé de production d'un matériau imprimé utilisant l'encre lithographique selon l'une quelconque des revendications 1 à 9.

11. Procédé de production d'un matériau imprimé comprenant l'étape d'impression de l'encre lithographique selon l'une quelconque des revendications 1 à 9 sur un substrat à l'aide d'une plaque de lithographie sans eau.

12. Procédé de production d'un matériau imprimé selon la revendication 11, comprenant en outre l'étape consistant à effectuer une irradiation avec un faisceau à énergie active.

13. Procédé de production d'un matériau imprimé selon la revendication 11 ou 12, dans lequel le substrat comprend au moins un élément choisi parmi un film plastique, un papier stratifié à film plastique, un métal, un papier à métal déposé en phase vapeur et un film plastique à métal déposé en phase vapeur.
